# EUROPEAN PATENT APPLICATION

(11) **EP 4 120 727 A1**
(43) Date of publication of application: **18.01.2023**
(21) Application number: 21784307.7
(22) Date of filing: 09.04.2021
(51) Int. Cl.: H04W 28/02

(54) **FLOW CONTROL METHOD AND APPARATUS**

(30) Priority: 10.04.2020 CN 202010281697
(71) Applicant: Huawei Technologies Co., Ltd., Shenzhen, Guangdong 518129, (CN)
(72) Inventor: ZHUO, Yibin, Shenzhen, Guangdong 518129 (CN); LIU, Jing, Shenzhen, Guangdong 518129 (CN); ZHU, Yuanping, Shenzhen, Guangdong 518129 (CN)
(74) Representative: Pfenning, Meinig & Partner mbB
(86) International application number: PCT/CN2021/086299
(87) International publication number: WO 2021/204278

(57) **Abstract**

Embodiments of this application provide a flow control method and an apparatus, and relate to the field of communication, to avoid a packet loss problem caused by link congestion or deterioration. The method is as follows: A first IAB node receives first information from a second IAB node, where the first information indicates buffer statuses of uplink data that respectively corresponds to N BAP routing identifiers in the second IAB node and/or buffer statuses of uplink data that respectively corresponds to M RLC CHs between the second IAB node and the first IAB node. The first IAB node is a child node of the second IAB node, and N and M are integers greater than or equal to 1. The first IAB node performs uplink flow control based on the first information. Embodiments of this application are applied to an IAB network.

## Description

This application claims priority to Chinese Patent Application No. 202010281697.X, filed with the China National Intellectual Property Administration on April 10, 2020 and entitled "FLOW CONTROL METHOD AND APPARATUS", which is incorporated herein by reference in its entirety.

### TECHNICAL FIELD

This application relates to the field of communication, and in particular, to a flow control method and an apparatus.

### BACKGROUND

To meet an ultra-high capacity requirement in a 5^{th} generation (the fifth generation, 5G) system, a high-frequency carrier that is eagerly concerned because the high-frequency carrier has more abundant frequency resources than a low-frequency carrier is selected as a main operating frequency band of the 5G system. The high-frequency carrier has a poor propagation characteristic, is severely attenuated if blocked, and has a small coverage area. Consequently, a large quantity of small cells need to be densely deployed in a hotspot area. Correspondingly, costs of providing optical fiber backhaul for the large quantity of densely deployed small cells are high, and optical fiber deployment is difficult. To resolve the foregoing problems, an integrated access and backhaul (integrated access and backhaul, IAB) technology of wireless relaying is introduced. Both an access link (access link) and a backhaul link (backhaul link) of the wireless relaying use a wireless transmission solution to avoid the optical fiber deployment.

In an uplink transmission scenario of IAB, if a problem (congestion or deterioration) occurs on a link between two IAB nodes (nodes), a packet loss problem may be caused.

### SUMMARY

Embodiments of this application provide a flow control method and an apparatus, to avoid a packet loss problem caused by link congestion or deterioration.

According to a first aspect, an embodiment of this application provides a flow control method. The method includes: A first integrated access and backhaul IAB node receives first information from a second IAB node, where the first information indicates buffer statuses of uplink data that respectively corresponds to N backhaul adaptation protocol (backhaul adaptation protocol, BAP) routing identifiers in the second IAB node and/or buffer statuses of uplink data that respectively corresponds to M radio link control channels (radio link control channels, RLC CHs) between the second IAB node and the first IAB node. The first IAB node is a child node of the second IAB node, and N and M are integers greater than or equal to 1. The first IAB node performs uplink flow control based on the first information.

Based on the method provided in this embodiment of this application, the first IAB node may receive the first information from the second IAB node, where the first information indicates the buffer statuses of the uplink data that respectively corresponds to the N BAP routing identifiers in the second IAB node and/or the buffer statuses of the uplink data that respectively corresponds to the M RLC CHs between the second IAB node and the first IAB node. The first IAB node may perform the uplink flow control based on the first information, so that congestion of the uplink data in the second IAB node can be avoided to avoid a packet loss.

It should be noted that all IAB nodes mentioned in this embodiment of this application may be replaced with relay nodes. For example, the first IAB node may be a first relay node, and the second IAB node may be a second relay node.

In a possible implementation, that the first IAB node performs uplink flow control based on the first information includes: The first IAB node performs flow control on the uplink data that respectively corresponds to the N BAP routing identifiers and/or the first IAB node performs flow control on the uplink data that respectively corresponds to the M RLC CHs.

In a possible implementation, the buffer statuses of the uplink data that respectively corresponds to the N BAP routing identifiers include a congestion state and/or the buffer statuses of the uplink data that respectively corresponds to the M RLC CHs include a congestion state.

In a possible implementation, the first information includes the N BAP routing identifiers and/or identifiers of the M RLC CHs.

In a possible implementation, the first information further includes one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

In a possible implementation, that the first IAB node performs uplink flow control based on the first information includes: A BAP layer of the first IAB node decelerates or stops sending of the uplink data that respectively corresponds to the N BAP routing identifiers and/or the uplink data that respectively corresponds to the M RLC CHs to a lower-layer protocol layer of the BAP layer. Alternatively, a media access control (media access control, MAC) layer of the first IAB node selects a logical channel (logical channel, LCH) that corresponds to a BAP routing identifier other than the N BAP routing identifiers and/or an LCH that corresponds to an RLC CH other than the M RLC CHs when assembling an uplink data packet. Alternatively, a MAC layer of the first IAB node reduces priorities of LCHs that correspond to the N BAP routing identifiers and/or priorities of LCHs that correspond to the M RLC CHs when assembling an uplink data packet. Alternatively, a MAC layer of the first IAB node reduces prioritized bit rates PBRs of LCHs that correspond to the N BAP routing identifiers and/or PBRs of LCHs that correspond to the M RLC CHs when assembling an uplink data packet.

In a possible implementation, that the first IAB node performs uplink flow control based on the first information includes: A BAP layer of the first IAB node controls data volumes of the uplink data that respectively corresponds to the N BAP routing identifiers and/or the M RLC CHs to be less than or equal to the expected maximum data volumes of uplink transmission when sending data to a lower-layer protocol layer of the BAP layer. Alternatively, a MAC layer of the first IAB node controls data volumes of LCHs that correspond to the N BAP routing identifiers and/or the M RLC CHs to be less than or equal to the expected maximum data volumes of uplink transmission when assembling an uplink data packet.

In a possible implementation, the method further includes: The first IAB node receives second information from the second IAB node, where the second information indicates to: release flow control on uplink data that corresponds to a part or all of the N BAP routing identifiers and/or flow control on uplink data that corresponds to a part or all of the M RLC CHs; or release flow control on the uplink data that corresponds to the N BAP routing identifiers and/or the M RLC CHs after valid time expires, where the valid time is predefined or configured.

In a possible implementation, the first information is carried in a BAP control protocol data unit PDU, a radio link control RLC message, or a media access control control element MAC CE.

According to a second aspect, an embodiment of this application provides a flow control method. The method includes: A second integrated access and backhaul IAB node sends first information to a first IAB node, where the first information indicates buffer statuses of uplink data that respectively corresponds to N backhaul adaptation protocol BAP routing identifiers in the second IAB node and/or buffer statuses of uplink data that respectively corresponds to M radio link control channels RLC CHs between the second IAB node and the first IAB node. The first IAB node is a child node of the second IAB node, and N and M are integers greater than or equal to 1.

Based on the method provided in this embodiment of this application, the second IAB node may send the first information to the first IAB node, where the first information indicates the buffer statuses of the uplink data that respectively corresponds to the N BAP routing identifiers in the second IAB node and/or the buffer statuses of the uplink data that respectively corresponds to the M RLC CHs between the second IAB node and the first IAB node. Therefore, the first IAB node may perform uplink flow control based on the first information, so that congestion of the uplink data in the second IAB node can be avoided to avoid a packet loss.

In a possible implementation, the buffer statuses of the uplink data that respectively corresponds to the N BAP routing identifiers include a congestion state and/or the buffer statuses of the uplink data that respectively corresponds to the M RLC CHs include a congestion state.

In a possible implementation, the first information includes the N BAP routing identifiers and/or identifiers of the M RLC CHs.

In a possible implementation, the first information further includes one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

In a possible implementation, the method further includes: The second IAB node sends second information to the first IAB node, where the second information indicates to release flow control on uplink data that corresponds to a part or all of the N BAP routing identifiers and/or flow control on uplink data that corresponds to a part or all of the M RLC CHs.

According to a third aspect, an embodiment of this application provides a data transmission method. The method includes: A first integrated access and backhaul IAB node receives uplink scheduling information from a second IAB node, where the uplink scheduling information indicates an uplink resource, and the uplink resource is used to transmit uplink data that respectively corresponds to N backhaul adaptation protocol BAP routing identifiers and/or uplink data that respectively corresponds to M radio link control channels RLC CHs between the second IAB node and the first IAB node. The first IAB node is a child node of the second IAB node, and N and M are integers greater than or equal to 1. The first IAB node sends the uplink data that corresponds to the N BAP routing identifiers and/or the uplink data that corresponds to the M RLC CHs on the uplink resource to the second IAB node.

Based on the method provided in this embodiment of this application, the first IAB node may receive the uplink scheduling information from the second IAB node, where the uplink scheduling information indicates the uplink resource, and the uplink resource is used to transmit the uplink data that corresponds to the N BAP routing identifiers and/or the uplink data that corresponds to the M RLC CHs between the second IAB node and the first IAB node. The first IAB node sends the uplink data that corresponds to the N BAP routing identifiers and/or the uplink data that corresponds to the M RLC CHs on the uplink resource to the second IAB node. Therefore, congestion of the uplink data in the second IAB node can be avoided to avoid a packet loss.

In a possible implementation, the uplink scheduling information includes the N BAP routing identifiers and uplink resource information that corresponds to the N BAP routing identifiers and/or identifiers of the M RLC CHs and uplink resource information that corresponds to the M RLC CHs.

In a possible implementation, the uplink scheduling information is carried in downlink control information DCI.

According to a fourth aspect, an embodiment of this application provides a data transmission method. The method includes: A second IAB node sends uplink scheduling information to a first IAB node, where the uplink scheduling information indicates an uplink resource, and the uplink resource is used to transmit uplink data that respectively corresponds to N backhaul adaptation protocol BAP routing identifiers and/or uplink data that respectively corresponds to M radio link control channels RLC CHs between the second IAB node and the first IAB node. The first IAB node is a child node of the second IAB node, and N and M are integers greater than or equal to 1. The second IAB node receives the uplink data that corresponds to the N BAP routing identifiers and/or the uplink data that corresponds to the M RLC CHs from the first IAB node.

Based on the method provided in this embodiment of this application, the second IAB node may send the uplink scheduling information to the first IAB node, where the uplink scheduling information indicates the uplink resource, and the uplink resource is used to transmit the uplink data that corresponds to the N BAP routing identifiers and/or the uplink data that corresponds to the M RLC CHs between the second IAB node and the first IAB node. The first IAB node sends the uplink data that corresponds to the N BAP routing identifiers and/or the uplink data that corresponds to the M RLC CHs on the uplink resource to the second IAB node. Therefore, congestion of the uplink data in the second IAB node can be avoided to avoid a packet loss.

In a possible implementation, the uplink scheduling information includes the N BAP routing identifiers and uplink resource information that corresponds to the N BAP routing identifiers and/or identifiers of the M RLC CHs and uplink resource information that corresponds to the M RLC CHs.

In a possible implementation, the uplink scheduling information is carried in downlink control information DCI.

According to a fifth aspect, an embodiment of this application provides an uplink transmission method. The method includes: A first IAB node receives a radio link failure RLF notification from a second IAB node, where the RLF notification indicates that an RLF occurs on wireless backhaul links that correspond to N backhaul adaptation protocol BAP routing identifiers. The first IAB node is a child node of the second IAB node, and N is an integer greater than or equal to 1. The first IAB node adjusts uplink transmission of uplink data that corresponds to the N BAP routing identifiers.

Based on the method provided in this embodiment of this application, the first IAB node may receive the RLF notification sent by the second IAB node, where the RLF notification indicates that the RLF occurs on the wireless backhaul links that correspond to the N BAP routing identifiers. The first IAB node may adjust (reroute) the uplink transmission of the uplink data that corresponds to the N BAP routing identifiers, so that congestion of the uplink data in the second IAB node can be avoided to avoid a packet loss.

In a possible implementation, that the first IAB node adjusts uplink transmission of uplink data that corresponds to the N BAP routing identifiers includes: The first IAB node selects, for the uplink data that corresponds to the N BAP routing identifiers, a BAP routing identifier other than the N BAP routing identifiers to perform the uplink transmission.

In a possible implementation, the BAP routing identifier and the N BAP routing identifiers have a same target IAB donor node.

In a possible implementation, the RLF notification includes the N BAP routing identifiers.

In a possible implementation, the method further includes: The first IAB node replaces a BAP routing identifier in a BAP header of the uplink data with another BAP routing identifier.

In a possible implementation, the method further includes: A BAP layer of the first IAB node stops sending of the uplink data that corresponds to the N BAP routing identifiers to a lower-layer protocol layer of the BAP layer. Alternatively, a MAC layer of the first IAB node selects a logical channel LCH that corresponds to a BAP routing identifier other than the N BAP routing identifiers when assembling an uplink data packet.

According to a sixth aspect, an embodiment of this application provides an uplink transmission method. The method includes: A second IAB node sends a radio link failure RLF notification to a first IAB node, where the RLF notification indicates that an RLF occurs on wireless backhaul links that correspond to N backhaul adaptation protocol BAP routing identifiers. The first IAB node is a child node of the second IAB node, and N is an integer greater than or equal to 1.

Based on the method provided in this embodiment of this application, the second IAB node may send the RLF notification to the first IAB node, where the RLF notification indicates that the RLF occurs on the wireless backhaul links that correspond to the N BAP routing identifiers. Therefore, the first IAB node may adjust (reroute) uplink transmission of uplink data that corresponds to the N BAP routing identifiers, so that congestion of the uplink data in the second IAB node can be avoided to avoid a packet loss.

In a possible implementation, the RLF notification includes the N BAP routing identifiers.

According to a seventh aspect, an embodiment of this application provides a first integrated access and backhaul IAB node, including: a receiving unit, configured to receive first information from a second IAB node, where the first information indicates buffer statuses of uplink data that respectively corresponds to N backhaul adaptation protocol BAP routing identifiers in the second IAB node and/or buffer statuses of uplink data that respectively corresponds to M radio link control channels RLC CHs between the second IAB node and the first IAB node, the first IAB node is a child node of the second IAB node, and N and M are integers greater than or equal to 1; and a processing unit, configured to perform uplink flow control based on the first information.

In a possible implementation, the processing unit is configured to: perform flow control on the uplink data that respectively corresponds to the N BAP routing identifiers and/or perform flow control on the uplink data that respectively corresponds to the M RLC CHs.

In a possible implementation, the buffer statuses of the uplink data that respectively corresponds to the N BAP routing identifiers include a congestion state and/or the buffer statuses of the uplink data that respectively corresponds to the M RLC CHs include a congestion state.

In a possible implementation, the first information includes the N BAP routing identifiers and/or identifiers of the M RLC CHs.

In a possible implementation, the first information further includes one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

In a possible implementation, the processing unit is configured to: decelerate or stop sending of the uplink data that respectively corresponds to the N BAP routing identifiers and/or the uplink data that respectively corresponds to the M RLC CHs to a lower-layer protocol layer of a BAP layer; select a logical channel LCH that corresponds to a BAP routing identifier other than the N BAP routing identifiers and/or an LCH that corresponds to an RLC CH other than the M RLC CHs when assembling an uplink data packet; reduce priorities of LCHs that correspond to the N BAP routing identifiers and/or priorities of LCHs that correspond to the M RLC CHs when assembling an uplink data packet; or reduce prioritized bit rates PBRs of LCHs that correspond to the N BAP routing identifiers and/or PBRs of LCHs that correspond to the M RLC CHs when assembling an uplink data packet.

In a possible implementation, the processing unit is configured to: control data volumes of the uplink data that respectively corresponds to the N BAP routing identifiers and/or the M RLC CHs to be less than or equal to the expected maximum data volumes of uplink transmission when sending data to a lower-layer protocol layer of a BAP layer; or control data volumes of LCHs that correspond to the N BAP routing identifiers and/or the M RLC CHs to be less than or equal to the expected maximum data volumes of uplink transmission when assembling an uplink data packet.

In a possible implementation, the receiving unit is further configured to: receive second information from the second IAB node, where the second information indicates to release flow control on uplink data that corresponds to a part or all of the N BAP routing identifiers and/or flow control on uplink data that corresponds to a part or all of the M RLC CHs. Alternatively, the processing unit is further configured to: release flow control on the uplink data that corresponds to the N BAP routing identifiers and/or the M RLC CHs after valid time expires, where the valid time is predefined or configured.

In a possible implementation, the first information is carried in a BAP control protocol data unit PDU, a radio link control RLC message, or a media access control control element MAC CE.

According to an eighth aspect, an embodiment of this application provides a second integrated access and backhaul IAB node, including a sending unit, configured to send first information to a first IAB node, where the first information indicates buffer statuses of uplink data that respectively corresponds to N backhaul adaptation protocol BAP routing identifiers in the second IAB node and/or buffer statuses of uplink data that respectively corresponds to M radio link control channels RLC CHs between the second IAB node and the first IAB node. The first IAB node is a child node of the second IAB node, and N and M are integers greater than or equal to 1.

In a possible implementation, the buffer statuses of the uplink data that respectively corresponds to the N BAP routing identifiers include a congestion state and/or the buffer statuses of the uplink data that respectively corresponds to the M RLC CHs include a congestion state.

In a possible implementation, the first information includes the N BAP routing identifiers and/or identifiers of the M RLC CHs.

In a possible implementation, the first information further includes one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

In a possible implementation, the sending unit is further configured to: send second information to the first IAB node, where the second information indicates to release flow control on uplink data that corresponds to a part or all of the N BAP routing identifiers and/or flow control on uplink data that corresponds to a part or all of the M RLC CHs.

According to a ninth aspect, an embodiment of this application provides a first integrated access and backhaul IAB node, including: a receiving unit, configured to receive uplink scheduling information from a second IAB node, where the uplink scheduling information indicates an uplink resource, and the uplink resource is used to transmit uplink data that respectively corresponds to N backhaul adaptation protocol BAP routing identifiers and/or uplink data that respectively corresponds to M radio link control channels RLC CHs between the second IAB node and the first IAB node, where the first IAB node is a child node of the second IAB node, and N and M are integers greater than or equal to 1; and a sending unit, configured to send the uplink data that corresponds to the N BAP routing identifiers and/or the uplink data that corresponds to the M RLC CHs on the uplink resource to the second IAB node.

In a possible implementation, the uplink scheduling information includes the N BAP routing identifiers and uplink resource information that corresponds to the N BAP routing identifiers and/or identifiers of the M RLC CHs and uplink resource information that corresponds to the M RLC CHs.

In a possible implementation, the uplink scheduling information is carried in downlink control information DCI.

According to a tenth aspect, an embodiment of this application provides a second IAB node, including: a sending unit, configured to send uplink scheduling information to a first IAB node, where the uplink scheduling information indicates an uplink resource, the uplink resource is used to transmit uplink data that respectively corresponds to N backhaul adaptation protocol BAP routing identifiers and/or uplink data that respectively corresponds to M radio link control channels RLC CHs between the second IAB node and the first IAB node, the first IAB node is a child node of the second IAB node, and N and M are integers greater than or equal to 1; and a receiving unit, configured to receive the uplink data that corresponds to the N BAP routing identifiers and/or the uplink data that corresponds to the M RLC CHs from the first IAB node.

In a possible implementation, the uplink scheduling information includes the N BAP routing identifiers and uplink resource information that corresponds to the N BAP routing identifiers and/or identifiers of the M RLC CHs and uplink resource information that corresponds to the M RLC CHs.

In a possible implementation, the uplink scheduling information is carried in downlink control information DCI.

According to an eleventh aspect, an embodiment of this application provides a first IAB node, including: a receiving unit, configured to receive a radio link failure RLF notification from a second IAB node, where the RLF notification indicates that an RLF occurs on wireless backhaul links that correspond to N backhaul adaptation protocol BAP routing identifiers, the first IAB node is a child node of the second IAB node, and N is an integer greater than or equal to 1; and a processing unit, configured to adjust uplink transmission of uplink data that corresponds to the N BAP routing identifiers.

In a possible implementation, the processing unit is configured to: select, for the uplink data that corresponds to the N BAP routing identifiers, a BAP routing identifier other than the N BAP routing identifiers to perform the uplink transmission.

In a possible implementation, the BAP routing identifier and the N BAP routing identifiers have a same target IAB donor node.

In a possible implementation, the RLF notification includes the N BAP routing identifiers.

In a possible implementation, the processing unit is further configured to replace a BAP routing identifier in a BAP header of the uplink data with another BAP routing identifier.

In a possible implementation, the processing unit is further configured to: stop sending of the uplink data that corresponds to the N BAP routing identifiers to a lower-layer protocol layer of a BAP layer. Alternatively, a MAC layer of the first IAB node selects a logical channel LCH that corresponds to a BAP routing identifier other than the N BAP routing identifiers when assembling an uplink data packet.

According to a twelfth aspect, an embodiment of this application provides a second IAB node, including a sending unit, configured to send a radio link failure RLF notification to a first IAB node, where the RLF notification indicates that an RLF occurs on wireless backhaul links that correspond to N backhaul adaptation protocol BAP routing identifiers. The first IAB node is a child node of the second IAB node, and N is an integer greater than or equal to 1.

In a possible implementation, the RLF notification includes the N BAP routing identifiers.

According to a thirteenth aspect, this application further provides a communication apparatus. The communication apparatus may be a first IAB node or a chip. The communication apparatus includes a processor, configured to implement any method provided in the first aspect, the third aspect, or the fifth aspect. The communication apparatus may further include a memory, configured to store program instructions and data. The memory may be a memory integrated into the communication apparatus, or an off-chip memory disposed outside the communication apparatus. The memory is coupled to the processor. The processor may invoke and execute the program instructions stored in the memory, to implement the any method provided in the first aspect, the third aspect, or the fifth aspect. The memory may be disposed in the processor, or the memory and the processor are independently disposed. The communication apparatus may further include a transceiver (a communication interface). The transceiver is used by the communication apparatus to communicate with another device (for example, an access network device).

According to a fourteenth aspect, this application further provides a communication apparatus. The communication apparatus may be a second IAB node or a chip. The communication apparatus includes a processor, configured to implement any method provided in the second aspect, the fourth aspect, or the sixth aspect. The communication apparatus may further include a memory, configured to store program instructions and data. The memory may be a memory integrated into the communication apparatus, or an off-chip memory disposed outside the communication apparatus. The memory is coupled to the processor. The processor may invoke and execute the program instructions stored in the memory, to implement the any method provided in the second aspect, the fourth aspect, or the sixth aspect. The memory may be disposed in the processor, or the memory and the processor are independently disposed. The communication apparatus may further include a transceiver (a communication interface). The transceiver is used by the communication apparatus to communicate with another device (for example, a multicast/broadcast control-plane function network element).

According to a fifteenth aspect, this application provides a computer-readable storage medium, including instructions. When the instructions are run on a computer, the computer is enabled to perform any method provided in any one of the first aspect to the sixth aspect.

According to a sixteenth aspect, this application provides a computer program product that includes instructions. When the computer program product runs on a computer, the computer is enabled to perform any method provided in any one of the first aspect to the sixth aspect.

According to a seventeenth aspect, this application provides a chip system. The chip system includes a processor, and may further include a memory, to implement any method provided in any one of the first aspect to the sixth aspect. The chip system may include a chip, or may include a chip and another discrete component.

According to an eighteenth aspect, this application provides a communication system. The system includes the communication apparatuses in the seventh aspect and the eighth aspect, or the communication apparatuses in the ninth aspect and the tenth aspect, or the communication apparatuses in the eleventh aspect and the twelfth aspect.

### BRIEF DESCRIPTION OF DRAWINGS

FIG. 1 is a schematic diagram of an IAB network according to an embodiment of this application;
FIG. 2A is a schematic diagram of a protocol stack according to an embodiment of this application;
FIG. 2B is a schematic diagram of a mapping relationship according to an embodiment of this application;
FIG. 2C is a schematic diagram of another mapping relationship according to an embodiment of this application;
FIG. 3 is a schematic diagram of a system architecture according to an embodiment of this application;
FIG. 4 is a schematic diagram of a structure of a first IAB node or a second IAB node according to an embodiment of this application;
FIG. 5 is a schematic diagram of signal exchange applicable to a flow control method according to an embodiment of this application;
FIG. 6 is a schematic diagram of another IAB network according to an embodiment of this application;
FIG. 7 is a schematic diagram of signal exchange applicable to data transmission according to an embodiment of this application;
FIG. 8 is a schematic diagram of signal exchange applicable to an uplink transmission method according to an embodiment of this application;
FIG. 9 is a schematic diagram of still another IAB network according to an embodiment of this application;
FIG. 10 is a schematic diagram of signal interaction applicable to a scheduling request (scheduling request, SR) cancellation method according to an embodiment of this application;
FIG. 11 is a schematic diagram of a structure of a first IAB node according to an embodiment of this application; and
FIG. 12 is a schematic diagram of a structure of a second IAB node according to an embodiment of this application.

### DESCRIPTION OF EMBODIMENTS

In a current 5G standard, considering that a high frequency band has a small coverage area, multi-hop networking may be used in an IAB network to ensure coverage performance of a network. In consideration of a service transmission reliability requirement, an IAB node may be enabled to support dual connectivity (dual connectivity, DC) or multi-connectivity (multi-connectivity), to cope with an exception that may occur on a backhaul link, for example, an exception such as a link failure or blockage/congestion (blockage) or load fluctuation, thereby enhancing transmission reliability.

Because the IAB network supports multi-hop and multi-connectivity networking, there may be a plurality of transmission paths between a terminal device (for example, user equipment (user equipment, UE)) and an IAB donor (IAB donor) node. Each transmission path includes a plurality of nodes, and the plurality of nodes may include UE, one or more IAB nodes, and an IAB donor. If the IAB donor is in a form in which a centralized unit (centralized unit, CU) is separated from a distributed unit (distributed unit, DU), the IAB donor may include an IAB-donor-DU part (donor DU), an IAB-donor-CU (donor CU) part, and the like. In the IAB network, the IAB node may provide a wireless access service for the terminal device, and service data of the terminal device is transmitted by the IAB node to the IAB donor through a wireless backhaul link.

Each IAB node considers a neighboring node that provides a backhaul service for the IAB node as a parent node (or an upper-level node), and correspondingly, each IAB node may be considered as a child node (or a lower-level node) of the parent node of the IAB node. A wireless link used when an IAB node communicates with a child node of the IAB node is referred to as an access link, and includes an uplink transmission link and a downlink transmission link. Uplink transmission on the access link is also referred to as uplink transmission of the access link, and downlink transmission on the access link is also referred to as downlink transmission of the access link. A wireless link used when an IAB node communicates with a parent node of the IAB node may be referred to as a backhaul link, and includes an uplink transmission link and a downlink transmission link. Uplink transmission on the backhaul link is also referred to as uplink transmission of the backhaul link, and downlink transmission on the backhaul link is also referred to as downlink transmission of the backhaul link.

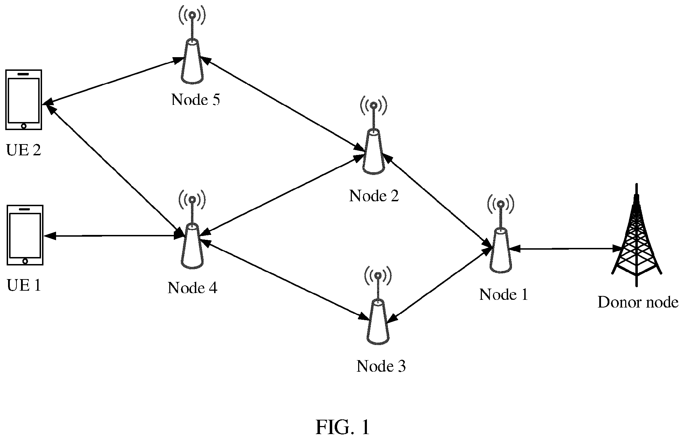

For example, in a wireless relay scenario shown in FIG. 1, a parent node of a node 1 is a donor node (namely, an IAB donor), the node 1 is a parent node of a node 2 and a node 3, both the node 2 and the node 3 are parent nodes of a node 4, and a parent node of a node 5 is the node 2. There are two available paths for data transmission between UE 1 and the IAB donor. Path 1: the UE 1-the node 4-the node 3-the node 1-the IAB donor. Path 2: the UE 1-the node 4-the node 2-the node 1-the IAB donor. There are three available paths for data transmission between UE 2 and the IAB donor. Path 3: the UE 2-the node 4-the node 3-the node 1-the IAB donor. Path 4: the UE 2-the node 4-the node 2-the node 1-the IAB donor. Path 5: the UE 2-the node 5-the node 2-the node 1-the IAB donor. An uplink data packet of each UE may be transmitted by one or more IAB nodes to the IAB donor, and then sent by the IAB donor to a mobile gateway device (for example, a user plane function (user plane function, UPF) network element in a 5G core network). A downlink data packet of each UE may be received by the IAB donor from the mobile gateway device, and then sent by the IAB donor to the UE.

The IAB node may include a mobile termination (mobile termination, MT) part and a distributed unit (distributed unit, DU) part. When the IAB node faces a parent node of the IAB node (where the parent node of the IAB node may be another IAB node or the IAB donor), the IAB node may be considered as user equipment, namely, an MT. When the IAB node faces a child node of the IAB node (where the child node of the IAB node may be another IAB node or a terminal device), the IAB node may be considered as a network device, namely, a DU, and is configured to provide a backhaul service for the child node.

The IAB donor may be an access network element having a complete access function, or may be an access network element in a form in which a CU is separated from a DU. The IAB donor may be connected to a core network (for example, a 5G core network (5G core, 5GC)) element that serves the terminal device, and also provides a wireless backhaul service for the IAB node. For ease of description, a centralized unit of the IAB donor is referred to as a donor CU for short (or directly referred to as a CU), and a distributed unit of the IAB donor is referred to as a donor DU for short. The donor CU may alternatively be in a form in which a control plane (control plane, CP) is separated from a user plane (user plane, UP). For example, the CU may include one CU-CP and one CU-UP (or more CU-UPs). In embodiments of this application, the IAB donor may also be referred to as an IAB donor node, a donor node (donor node), or a donor base station (DgNB, donor gNodeB). This is not limited in this application.

An IAB networking scenario shown in FIG. 1 is merely an example. In an IAB networking scenario in which multi-hop and multi-connectivity are combined, there are more other possibilities. For example, a DgNB and an IAB node served by another DgNB may form dual connectivity to serve UE. Details are not listed one by one herein in this application.

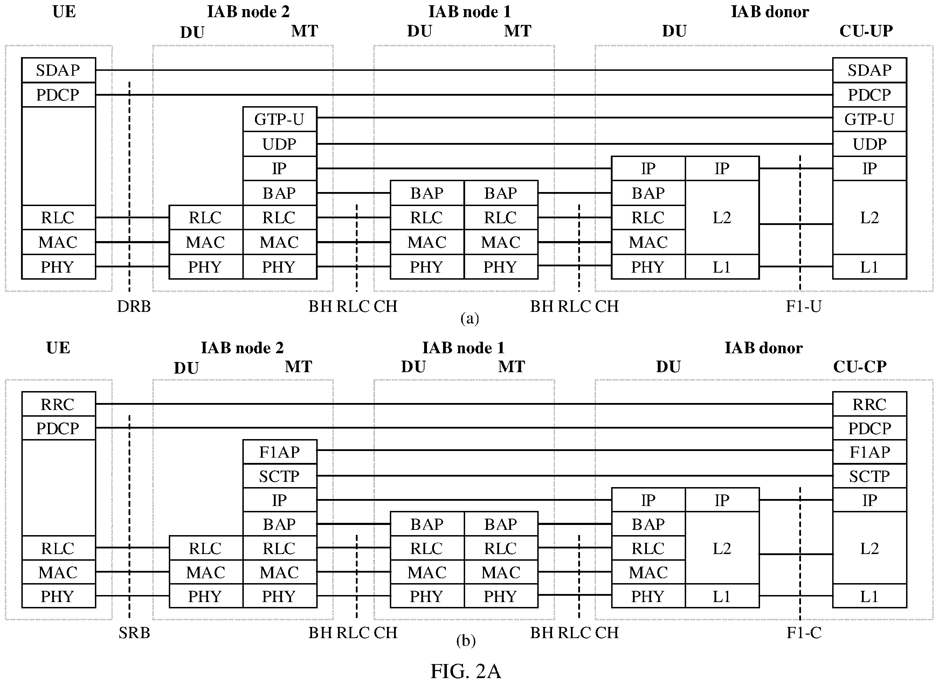

As shown in FIG. 2A, in current discussions on an IAB network, it is determined that a backhaul adaptation protocol (Backhaul Adaptation Protocol, BAP) layer is introduced to a wireless backhaul link. The protocol layer may be located above an RLC layer, and may be used to implement functions such as routing of a data packet on the wireless backhaul link and bearer mapping. It should be understood that an adaptation layer shown in FIG. 2A may alternatively exist as a sub-layer of the RLC layer or a MAC layer. This is not limited in this application.

An F1 interface (also referred to as an F1^{∗} interface, which may be uniformly referred to as the F1 interface in embodiments of this application, but a name is not limited) needs to be established between an IAB node (a DU part of the IAB) and an IAB donor (or a donor CU). The F1 interface supports a user plane protocol (F1-U/F1^{∗}-U) and a control plane protocol (F1-C/F1^{∗}-C). The user plane protocol includes one or more of the following protocol layers: a general packet radio service (general packet radio service, GPRS) tunneling protocol-user plane (GPRS tunneling protocol-user plane, GTP-U) layer, a user datagram protocol (user datagram protocol, UDP) layer, and an internet protocol (internet protocol, IP) layer. The control plane protocol includes one or more of the following protocol layers: an F1 application protocol (F1 application protocol, F1AP) layer, a stream control transmission protocol (stream control transport protocol, SCTP) layer, and the IP layer. Through a control plane of the F1 interface, interface management, donor DU management, UE context-related configuration, and the like may be performed between the IAB node and the IAB donor. Through a user plane of the F1 interface, functions such as user plane data transmission and downlink transmission status feedback may be performed between the IAB node and the IAB donor.

In the IAB network, a peer physical layer (physical layer, PHY), a peer MAC layer, and a peer radio link control (radio link control, RLC) layer of a terminal are located on an access IAB node. A peer packet data convergence protocol (packet data convergence protocol, PDCP) layer, a peer service data adaptation protocol (service data adaptation protocol, SDAP) layer, and a peer radio resource control (radio resource control, RRC) layer of the terminal are located on an IAB donor CU. If the IAB donor CU includes a CP and a UP, the peer RRC layer of the terminal is located on the CP of the IAB donor CU (namely, the donor-CU-CP), and the peer PDCP layer and the peer SDAP layer of the terminal are located on the UP of the IAB donor CU (namely, the donor-CU-UP).

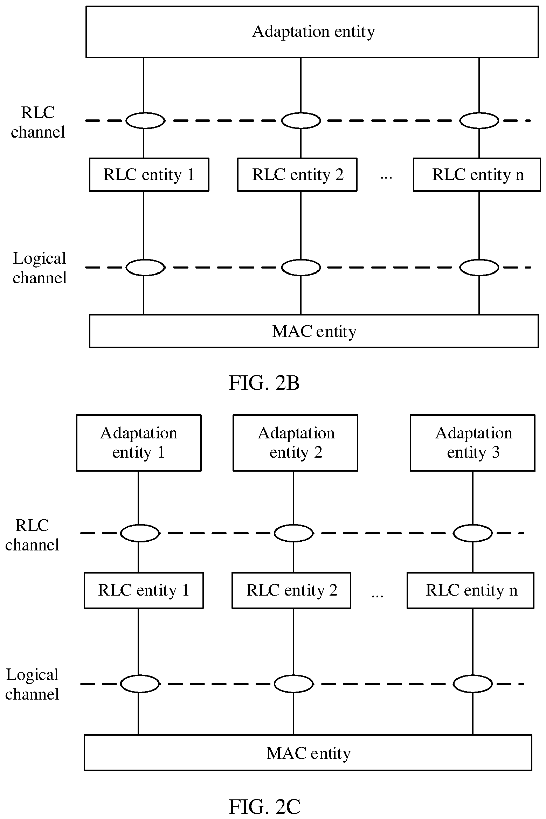

(a) in FIG. 2A and (b) in FIG. 2A are respectively a schematic diagram of a user plane protocol stack and a schematic diagram of a control plane protocol stack in the IAB network according to an embodiment of this application. The following are described with reference to (a) in FIG. 2A and (b) in FIG. 2A.

For the user plane, in (a) in FIG. 2A, a Uu interface is established between UE and an IAB node 2-DU (hereinafter referred to as IAB 2-DU for short), and peer protocol layers include RLC layers, MAC layers, and PHY layers. An F1-U interface is established between the IAB 2-DU and an IAB donor CU 1, and peer protocol layers include GTP-U layers, UDP layers, and IP layers. An F1 interface in the IAB donor is established between an IAB donor DU and the IAB donor CU, and peer protocol layers include IP layers, L2s, and L1s. In addition, peer SDAP layers and peer PDCP layers are established between the UE and the IAB donor CU, and peer IP layers are established between the IAB 2-DU and the IAB donor DU.

It can be learned that, compared with a user plane protocol stack of a single air interface, in the user plane protocol stack in the IAB network, a DU of an IAB access node implements a part of functions of a gNB-DU of the single air interface (namely, functions of establishing a peer RLC layer, a peer MAC layer, and a peer PHY layer of the terminal and establishing a peer GTP-U layer, a peer UDP layer, and a peer IP layer of the IAB donor CU). It may be understood that the DU of the access IAB node implements a function of the gNB-DU of the single air interface, and the IAB donor CU implements a function of a gNB-CU of the single air interface.

For the control plane, as shown in (b) in FIG. 2A, the Uu interface is established between the UE and the IAB 2-DU, and peer protocol layers include RLC layers, MAC layers, and PHY layers. An F1-C interface is established between the IAB 2-DU and the IAB donor CU, and peer protocol layers include F1AP layers, SCTP layers, and IP layers. The F1 interface in the IAB donor is established between the IAB donor DU and the IAB donor CU, and peer protocol layers include IP layers, L2s, and L1s. In addition, peer RRC layers and peer PDCP layers are established between the UE and the IAB donor CU, and peer IP layers are established between the IAB donor DU and the IAB donor DU.

It can be learned that, compared with a control plane protocol stack of the single air interface, in the control plane protocol stack in the IAB network, the DU of the access IAB node implements functions of the gNB - DU of the single air interface (namely, functions of establishing the peer RLC layer, the peer MAC layer, and the peer PHY layer of the terminal and establishing a peer F1AP layer, a peer SCTP layer, and the peer IP layer of the CU). It may be understood that the DU of the access IAB node in the IAB network implements the function of the gNB-DU of the single air interface, and the IAB donor CU implements the function of the gNB-CU of the single air interface.

On the control plane, an RRC message is encapsulated in an F1AP message between the access IAB node and the IAB donor CU for transmission. For example, in FIG. 2A, a routing path of "the UE-an IAB node 2-an IAB node 1-the IAB donor" is used as an example. In an uplink direction, the UE may encapsulate the RRC message in a PDCP protocol data unit (protocol data unit, PDU) that is then processed by an RLC layer, a MAC layer, and a PHY layer in sequence and sent to the IAB 2-DU. The IAB 2-DU performs processing at a PHY layer, a MAC layer, and an RLC layer in sequence to obtain the PDCP PDU, encapsulates the PDCP PDU in the F1AP message, and performs processing at an SCTP layer and an IP layer to obtain an IP packet. An IAB node 2-MT (IAB 2-MT for short) separately performs processing of the IP packet at a BAP layer, an RLC layer, a MAC layer, and a PHY layer and sends the IP packet to an IAB node 1-DU (IAB 1-DU for short). The IAB 1-DU performs processing at a PHY layer, a MAC layer, an RLC layer, and a BAP layer in sequence to obtain the IP packet, and then an IAB node 1-MT (IAB 1-MT for short) sends the IP packet to the IAB donor DU by using an operation similar to that of the IAB 2-MT. After obtaining the IP packet through parsing, the IAB donor DU sends the IP packet to the IAB donor CU. The IAB donor CU performs the processing of the IP packet at an SCTP layer, an F1AP layer, and a PDCP layer to obtain the RRC message. Operations in a downlink direction are similar. Details are not described herein again.

On the control plane, a PDCP data packet is encapsulated in a GTP-U tunnel between the access IAB node and the IAB donor CU for transmission. The GTP-U tunnel is established on the F1-U interface.

To make embodiments of this application clearer, the following collectively describes some content and concepts related to embodiments of this application.

### (1) Access IAB node and intermediate IAB node

The access IAB node in embodiments of this application is an IAB node accessed by the terminal, and the intermediate IAB node is an IAB node between the access IAB node and the donor node.

For example, with reference to FIG. 1, in the path "the UE 1→the IAB node 4→the IAB node 3→the IAB node 1→the donor node", the IAB node 4 is an access IAB node, and the IAB node 3 and the IAB node 1 are intermediate IAB nodes. The IAB node 3 provides a backhaul service for the IAB node 4, and the IAB node 1 provides a backhaul service for the IAB node 3.

It should be noted that, an IAB node is an access IAB node for a terminal that accesses the IAB node. For a terminal that accesses another IAB node, the IAB node is an intermediate IAB node. Therefore, whether an IAB node is specifically an access IAB node or an intermediate IAB node is not fixed, and needs to be determined based on a specific application scenario.

### (2) Link, access link, and backhaul link

The link is a path between two neighboring nodes on a path.

The access link is a link accessed by a terminal, and may be a link between the terminal and an access network device, between the terminal and an IAB node, between the terminal and a donor node, or between the terminal and a donor DU. Alternatively, the access link includes a wireless link used when an IAB node serves as a common terminal device to communicate with a parent node of the IAB node. When serving as the common terminal device, the IAB node does not provide a backhaul service for any child node. The access link includes an uplink access link and a downlink access link. In this application, an access link of the terminal is a wireless link. Therefore, the access link may also be referred to as a wireless access link.

The backhaul link is a link between an IAB node and a parent node when the IAB node serves as a wireless backhaul node. When serving as the wireless backhaul node, the IAB node provides a wireless backhaul service for a child node. The backhaul link includes an uplink backhaul link and a downlink backhaul link. In this application, the backhaul link between the IAB node and the parent node is a wireless link. Therefore, the backhaul link may also be referred to as a wireless backhaul link.

### (3) Previous-hop node of a node, next-hop node of the node, ingress link (ingress link) of the node, and egress link (egress link) of the node

The previous-hop node of the node is the last node that is on a path including the node and that receives a data packet before the node.

The next-hop node of the node is the first node that is on the path including the node and that receives the data packet after the node.

The ingress link of the node is a link between the node and the previous-hop node of the node (for example, the previous-hop node of the node may be a child node of the node) for uplink transmission, and may also be referred to as a previous-hop link of the node.

The egress link of the node is a link between the node and the next-hop node of the node (for example, the next-hop node of the node may be a parent node of the node) for uplink transmission, and may also be referred to as a next-hop link of the node.

(4) Parent node and child node: Each IAB node considers a node that provides a wireless access service and/or a wireless backhaul service for the IAB node as a parent node (parent node). Correspondingly, each IAB node may be considered as a child node (child node) of the parent node of the IAB node. Alternatively, the child node may also be referred to as a lower-level node, and the parent node may also be referred to as an upper-level node.

### (5) Data packet

The data packet may be a data packet in a radio bearer (RB, radio bearer). The RB may be a data radio bearer (data radio bearer, DRB), and it may be understood that the data packet is a user plane data packet. The RB may alternatively be a signaling radio bearer (signaling radio bearer, SRB), and it may be understood that the data packet is a control plane data packet. Alternatively, the data packet may be a service operations, administration and maintenance (operation, administration and maintenance, OAM) data packet, and it may be understood that the data packet is a management plane data packet.

### (6) Mapping among an RLC channel, an LCH, and a protocol entity

FIG. 2B and FIG. 2C are schematic diagrams of mapping relationships among an RLC channel, an LCH, and a protocol entity. In FIG. 2B or FIG. 2C, the RLC CH is a channel between an RLC entity and an upper-layer protocol entity of the RLC entity. For example, if the upper layer of the RLC entity is a PDCP entity, an RLC CH on a backhaul link is a channel between the RLC entity and the PDCP entity. For another example, if the upper layer of the RLC entity is a BAP layer entity, an RLC CH on a backhaul link is a channel between the RLC entity and the BAP entity. Therefore, a definition of the RLC CH specifically depends on the upper-layer protocol entity of the RLC entity.

The logical channel is a channel between the RLC entity and a lower-layer protocol entity of the RLC entity. For example, the lower layer of the RLC entity is a MAC layer, and the logical channel is a channel between the RLC entity and a MAC entity.

An RLC CH of an IAB node is in a one-to-one correspondence with an RLC entity and an RLC bearer.

A relationship between the BAP entity and the RLC entity may be that one BAP entity corresponds to a plurality of RLC entities, as shown in FIG. 2B, or may be that one BAP entity corresponds to one RLC entity, as shown in FIG. 2C. This is not limited in this application.

In addition, a BAP layer has one or more of the following capabilities: adding, to a data packet, routing information (routing information) that can be identified by a wireless backhaul node (IAB node), performing route selection based on the routing information that can be identified by the wireless backhaul node, adding, to the data packet, identification information that is related to a quality of service (quality of service, QoS) requirement and that can be identified by the wireless backhaul node, performing, for the data packet, QoS mapping on a plurality of links including the wireless backhaul node, adding data packet type indication information to the data packet, and sending flow control feedback information to a node that has a flow control capability. It should be noted that a protocol layer having these capabilities is not necessarily named as the BAP layer, and may also have another name. A person skilled in the art may understand that any protocol layer having these capabilities may be understood as the BAP layer in embodiments of this application. An RLC CH on a BH link may be understood as a service differentiation channel on a BH link between two nodes, and the service differentiation channel may ensure specific quality of service QoS for data packet transmission. The RLC CH on the BH link may be understood as a logical concept rather than a concept of a physical channel.

Specifically, the RLC CH on the BH link may be understood as a peer RLC CH of two IAB nodes on the BH link. For example, in FIG. 1, the donor node has an RLC CH 1 and an RLC CH 2, and the node 1 has an RLC CH 1 and an RLC CH 2. An RLC entity of the RLC CH 1 of the donor node and an RLC entity of the RLC CH 1 of the node 1 are peer (peer) RLC entities. An RLC entity of the RLC CH 2 of the donor node and an RLC entity of the RLC CH 1 of the node 1 are peer (peer) RLC entities. It may be further understood that the RLC CH 1 of the donor node is a peer of the RLC CH 1 of the node 1, the RLC CH 2 of the donor node is a peer of the RLC CH 2 of the node 1, the RLC CH 1 of a BH link between the donor node DU and the node 1 may be the RLC CH 1 of the donor node and the RLC CH 1 of the node 1, and the RLC CH 2 of the BH link between the donor node DU and the node 1 may be the RLC CH 2 of the donor node and the RLC CH 2 of the node 1.

Because the RLC CH, the RLC bearer, and the logical channel are in a one-to-one correspondence, in embodiments of this application, the three descriptions may be replaced with each other. For example, in embodiments of this application, the RLC CH may be replaced with the RLC bearer or the logical channel. Similarly, an RLC bearer on a BH link may also be referred to as a BH bearer or a BH link bearer. Therefore, an RLC CH on the BH link may be replaced with the RLC bearer on the BH link, a logical channel on the BH link, the BH bearer, or the BH link bearer.

### (7) Egress RLC CH and ingress RLC CH

The egress RLC CH is an RLC CH between an IAB node and a parent node of the IAB node.

The ingress RLC CH is an RLC CH between the IAB node and a child node of the IAB node.

There may be a mapping relationship between the egress RLC CH and the ingress RLC CH. Uplink data received by the IAB node from the ingress RLC CH may be sent to a next IAB node (namely, the parent node of the IAB node) through the egress RLC CH to which the ingress RLC CH is mapped.

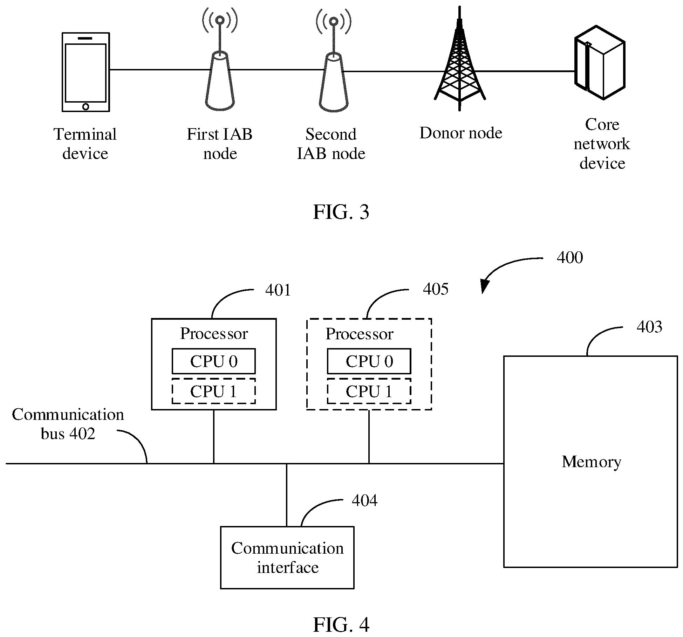

FIG. 3 is a schematic diagram of an architecture of a mobile communication system to which an embodiment of this application is applied. In FIG. 3, the mobile communication system includes a terminal device, at least one relay device (for example, a first IAB node and a second IAB node in FIG. 3), a radio access network device (for example, a donor node in FIG. 3), and a core network device. The terminal device is connected to the relay device in a wireless manner, and is connected to the radio access network device through one or more relay devices (where a part of terminal devices may alternatively be directly connected to the radio access network device in a wireless manner). The radio access network device is connected to the core network device in a wireless or wired manner.

A radio link between devices may perform communication by using a licensed spectrum (licensed spectrum), may perform communication by using an unlicensed spectrum (unlicensed spectrum), or may perform communication by using both the licensed spectrum and the unlicensed spectrum. A radio link between devices may perform communication by using a spectrum below 6 gigahertz (gigahertz, GHz), may perform communication by using a spectrum above 6 GHz, or may perform communication by using both the spectrum below 6 GHz and the spectrum above 6 GHz. A spectrum resource used by a radio link is not limited in embodiments of this application.

The core network device and the radio access network device may be independent and different physical devices, a function of the core network device and a logical function of the radio access network device may be integrated into a same physical device, or a part of functions of the core network device and a part of functions of the radio access network device may be integrated into one physical device. The terminal device may be located at a fixed place, or may be mobile. Quantities of core network devices, radio access network devices, relay devices, and terminal devices included in the mobile communication system are not limited in the embodiments of this application.

The radio access network device may be an access device through which the terminal device or the relay device accesses the mobile communication system in a wireless manner, and may be a NodeB NodeB, an evolved NodeB eNodeB, a gNodeB gNodeB in a 5G mobile communication system, a base station in a future mobile communication system, an access node in a Wi-Fi system, or the like. A specific technology and a specific device form that are used by the radio access network device are not limited in embodiments of this application.

The terminal device may also be referred to as a terminal (terminal), UE, a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The relay device may be a device that provides a wireless backhaul service or a wireless access service. The wireless backhaul service is a data and/or signaling backhaul service provided through a wireless backhaul link, and the wireless access service is a data and/or signaling backhaul service provided through a wireless access link. In one aspect, the relay device may provide the wireless access service for the terminal through an access link (access link, AL). In another aspect, the relay device may be connected to the access network device through a one-hop or multi-hop backhaul link (backhaul link, BL). Therefore, the relay device may implement data and/or signaling forwarding between the terminal and the access network device, so that coverage of the communication system is expanded.

The relay device may have different names in different communication systems. For example, the relay device may be referred to as a relay node, or may be referred to as a wireless backhaul node or a wireless backhaul device. In a 5G system, the relay node may be referred to as an integrated access and backhaul node (integrated access and backhaul node, IAB node). Certainly, in a future communication system, the relay node may further have different names. This is not limited herein. All IAB nodes mentioned in embodiments of this application may be replaced with relay nodes.

The radio access network device, the wireless backhaul device and the terminal device may be deployed on land, including an indoor device, an outdoor device, a handheld device, or a vehicle-mounted device; may be deployed on water; or may be deployed on a plane, a balloon, and a satellite in the air. Application scenarios of the radio access network device, the wireless backhaul device, and the terminal device are not limited in embodiments of this application.

Currently, in an uplink transmission scenario of the IAB, if a problem (congestion or deterioration) occurs on a link between two nodes, a packet loss problem may be caused. For example, in FIG. 1, if a problem occurs on a link between the node 3 and the node 4, an uplink data packet is congested on the node 4, and a packet loss may be caused. Based on this, embodiments of this application provide the following several solutions:

Solution 1: The first IAB node may receive first information from the second IAB node, where the first information indicates buffer statuses of uplink data in the second IAB node, for example, by using a BAP routing identifier or an RLC CH as a granularity. The first IAB node performs uplink flow control based on the first information. The second IAB node sends the first information to the first IAB node, and the first IAB node may learn of the buffer statuses of the uplink data in the second IAB node based on the first information. Therefore, the second IAB node can control sending of the uplink data, so that congestion of the uplink data in the second IAB node can be avoided to avoid a packet loss.

Solution 2: The first IAB node may receive indication information of an uplink resource from the second IAB node, where the uplink resource is used to transmit specific uplink data. For example, the specific uplink data includes uplink data used to transmit uplink data that corresponds to N BAP routing identifiers and/or uplink data that corresponds to M RLC CHs between the second IAB node and the first IAB node. Then, the first IAB node sends the specific uplink data on the uplink resource to the second IAB node. The second IAB node receives, from the first IAB node, the indication information of the uplink resource that is used to transmit the specific uplink data. The second IAB node may send only the specific uplink data, and does not send uplink data other than the specific uplink data, so that congestion of the uplink data in the second IAB node can be avoided to avoid a packet loss.

Solution 3: The second IAB node may send an RLF notification to the first IAB node, where the RLF notification indicates that an RLF occurs on one or more links, for example, may indicate that the RLF occurs on wireless backhaul links that correspond to the N BAP routing identifiers. The first IAB node may adjust transmission of uplink data on the one or more links (for example, change a link for the transmission of the uplink data, namely, reroute), for example, may reroute uplink transmission of the uplink data that corresponds to the N BAP routing identifiers, so that congestion of the uplink data in the second IAB node can be avoided to avoid a packet loss.

The first IAB node or the second IAB node in FIG. 3 in embodiments of this application may be implemented by one device, or may be a functional module in one device. This is not specifically limited in embodiments of this application. It may be understood that the foregoing function may be a network element in a hardware device, a software function running on dedicated hardware, a virtualized function instantiated on a platform (for example, a cloud platform), or a chip system. In embodiments of this application, the chip system may include a chip, or may include a chip and another discrete component.

For example, an apparatus configured to implement a function of the first IAB node or the second IAB node provided in embodiments of this application may be implemented by an apparatus 400 in FIG. 4. FIG. 4 is a schematic diagram of a hardware structure of the apparatus 400 according to an embodiment of this application. The apparatus 400 includes at least one processor 401, configured to implement a function of a CU, a DU, or an SN provided in embodiments of this application. The apparatus 400 may further include a communication bus 402 and at least one communication interface 404. The apparatus 400 may further include a memory 403.

In this embodiment of this application, the processor may be a central processing unit (central processing unit, CPU), a general-purpose processor, a network processor (network processor, NP), a digital signal processor (digital signal processing, DSP), a microprocessor, a microcontroller unit, or a programmable logic device (programmable logic device, PLD). The processor may alternatively be any other apparatus having a processing function, for example, an application-specific integrated circuit (application-specific integrated circuit, ASIC), a field programmable gate array (Field Programmable Gate Array, FPGA) or another programmable logic device, a transistor logic device, a hardware component, a software module, or any combination thereof.

The communication bus 402 may be configured to transmit information between the foregoing components.

The communication interface 404 is configured to communicate with another device or a communication network, for example, the Ethernet, a radio access network (radio access network, RAN), or a wireless local area network (wireless local area network, WLAN). The communication interface 404 may be an interface, a circuit, a transceiver, or another apparatus that can implement communication. This is not limited in this application. The communication interface 404 may be coupled to the processor 401. The coupling in this embodiment of this application may be an indirect coupling or a communication connection between apparatuses, units, or modules in an electrical form, a mechanical form, or another form, and is used for information exchange between the apparatuses, the units, or the modules.

In this embodiment of this application, the memory may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory is not limited thereto. The memory may exist independently; or may be coupled to the processor, for example, through the communication bus 402. The memory may alternatively be integrated with the processor.

The memory 403 is configured to store program instructions, and the processor 401 controls execution, to implement a method provided in the following embodiments of this application. The processor 401 is configured to invoke and execute the instructions stored in the memory 403, to implement the method provided in the following embodiments of this application.

Optionally, the computer-executable instructions in this embodiment of this application may also be referred to as application program code. This is not specifically limited in this embodiment of this application.

Optionally, the memory 403 may be included in the processor 401.

During specific implementation, in an embodiment, the processor 401 may include one or more CPUs, for example, a CPU 0 and a CPU 1 in FIG. 4.

During specific implementation, in an embodiment, the apparatus 400 may include a plurality of processors, for example, the processor 401 and a processor 405 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

Optionally, the apparatus 400 in FIG. 4 may further include a transceiver and an antenna. The apparatus 400 may communicate with another apparatus (for example, an IAB node or a terminal) through the transceiver and the antenna. For example, the first IAB node and the second IAB node may further include transceivers and antennas. The first IAB node may send data and/or information to the second IAB node through a transceiver and an antenna, and a transceiver and an antenna of the second IAB node receive the data and/or the information. The second IAB node may send data and/or information to the first IAB node through the transceiver and the antenna, and the transceiver and the antenna of the first IAB node receive the data and/or the information.

The transceiver may be configured to: perform conversion between a baseband signal and a radio frequency signal and process the radio frequency signal. The transceiver may be connected to the antenna. The transceiver includes a transmitter (transmitter, Tx) and a receiver (receiver, Rx). Specifically, one or more antennas may receive the radio frequency signal. The receiver of the transceiver is configured to: receive the radio frequency signal from the antenna, convert the radio frequency signal into a digital baseband signal or a digital intermediate frequency signal, and provide the digital baseband signal or the digital intermediate frequency signal for the processor, so that the processor further processes the digital baseband signal or the digital intermediate frequency signal, for example, performs demodulation processing and decoding processing. In addition, the transmitter Tx of the transceiver is configured to: receive a modulated digital baseband signal or digital intermediate frequency signal from the processor, convert the modulated digital baseband signal or digital intermediate frequency signal into a radio frequency signal, and send the radio frequency signal through the one or more antennas. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as digital signals. Optionally, the transmitter Tx and the receiver Rx may be implemented by different physical structures/circuits, or may be implemented by a same physical structure/circuit, namely, the transmitter Tx and the receiver Rx may be integrated together.

The transceiver may also be referred to as a transceiver unit, a transceiver machine, a transceiver apparatus, or the like. Optionally, a component that is in the transceiver unit and that is configured to implement a receiving function may be considered as a receiving unit. A component that is in the transceiver unit and that is configured to implement a sending function may be considered as a sending unit. That is, the transceiver unit includes the receiving unit and the sending unit. The receiving unit may also be referred to as a receiver, an input port, a receiver circuit, or the like. The sending unit may be referred to as a transmitter, a transmitter machine, a transmitter circuit, or the like. Alternatively, the Tx, the Rx, and the antenna may be combined into a transceiver.

The following describes the technical solutions in embodiments of this application with reference to the accompanying drawings in embodiments of this application. In descriptions of this application, unless otherwise specified, "at least one" means one or more, and "a plurality of' means two or more. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that names of all nodes and messages in this application are merely names set for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

In descriptions of this application, "and/or" may include both a case of "or" and a case of "and". For example, first information indicates buffer statuses of uplink data that respectively corresponds to N BAP routing identifiers in a second IAB node and/or buffer statuses of uplink data that respectively corresponds to M RLC CHs between the second IAB node and a first IAB node. It may mean that the first information indicates the buffer statuses of the uplink data that respectively corresponds to the N BAP routing identifiers in the second IAB node, or the first information indicates the buffer statuses of the uplink data that respectively corresponds to the M RLC CHs between the second IAB node and the first IAB node; or the first information indicates the buffer statuses of the uplink data that respectively corresponds to the N BAP routing identifiers in the second IAB node and the buffer statuses of the uplink data that respectively corresponds to the M RLC CHs between the second IAB node and the first IAB node. That is, the first information may indicate both the buffer statuses of the uplink data that respectively corresponds to the N BAP routing identifiers in the second IAB node and the buffer statuses of the uplink data that respectively corresponds to the M RLC CHs between the second IAB node and the first IAB node. Alternatively, the first information may indicate the buffer statuses of the uplink data that respectively corresponds to the N BAP routing identifiers in the second IAB node or the buffer statuses of the uplink data that respectively corresponds to the M RLC CHs between the second IAB node and the first IAB node. This is not limited in embodiments of this application.

For another example, that the first information includes the N BAP routing identifiers and/or identifiers of the M RLC CHs may mean that the first information includes the N BAP routing identifiers, or the first information includes the identifiers of the M RLC CHs, or the first information includes the N BAP routing identifiers and the identifiers of the M RLC CHs. That is, the N BAP routing identifiers and the identifiers of the M RLC CHs may coexist, or only one of the N BAP routing identifiers and the identifiers of the M RLC CHs may exist. This is not limited in embodiments of this application.

For ease of understanding, the following specifically describes a flow control method provided in embodiments of this application with reference to the accompanying drawings.

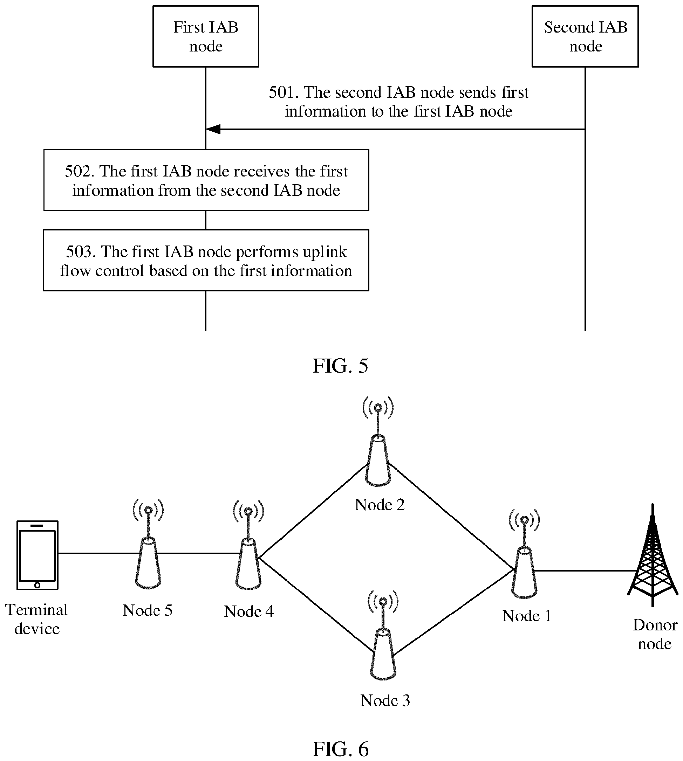

As shown in FIG. 5, an embodiment of this application provides a flow control method. The following describes a solution 1 in embodiments of this application with reference to FIG. 5. The method in FIG. 5 includes the following steps.

501. A second IAB node sends first information to a first IAB node.

The first IAB node is a child node of the second IAB node, that is, the second IAB node is a parent node of the first IAB node. The second IAB node may be a single-connectivity node, that is, the second IAB node may have only one parent node. Alternatively, the second IAB node may be a dual-connectivity or multi-connectivity node, that is, the second IAB node may have a plurality of parent nodes.

Optionally, when detecting that congestion occurs on an uplink or an uplink buffer (buffer) between the second IAB node and one or more parent nodes of the second IAB node, the second IAB node may send the first information to the child node (namely, the first IAB node) of the second IAB node. The first information may be uplink flow control feedback information. In an example, if a buffer occupancy percentage, a load occupancy percentage, or a buffer size of uplink data sent by an IAB node to a parent node of the IAB node exceeds a preset threshold, it may be considered that an uplink or an uplink buffer between the IAB node and the parent node of the IAB node is congested.

The first information may indicate buffer statuses of uplink data in the second IAB node. The first information may indicate the buffer statuses of the uplink data with different granularities in the second IAB node. The following uses several possible designs for description.

In a possible design, the first information may indicate buffer statuses of uplink data that respectively corresponds to N BAP routing identifiers (BAP routing ID) in the second IAB node. N is an integer greater than or equal to 1.

In another possible design, the first information may indicate buffer statuses of uplink data that respectively corresponds to M RLC CHs, where the M RLC CHs may be RLC CHs between the second IAB node and the first IAB node. M is an integer greater than or equal to 1. In other words, the first information may indicate buffer statuses of a BAP routing identifier granularity and/or buffer statuses of an RLC CH granularity.

In still another possible design, the first information may indicate buffer statuses of uplink data that respectively corresponds to one or more BAP routing identifiers on each of the M RLC CHs, where the M RLC CHs may be the RLC CHs between the second IAB node and the first IAB node.

The foregoing several possible designs may be combined with each other. The first information may indicate one or more kinds of content in the foregoing several designs. For example, the first information may indicate the buffer statuses of the uplink data that respectively corresponds to the N BAP routing identifiers and the buffer statuses of the uplink data that respectively corresponds to the M RLC CHs.

In some embodiments, the N BAP routing identifiers may include all or a part of BAP routing identifiers in the second IAB node. The second IAB node may collect statistics on (summarize in one way of understanding) the buffer statuses of the uplink data that respectively corresponds to the N BAP routing identifiers in the second IAB node. For each of the N BAP routing identifiers in the second IAB node, uplink data that corresponds to the BAP routing identifier may indicate uplink data (packet) that includes (carries) the BAP routing identifier in a data packet header. The uplink data (packet) that carries the BAP routing identifier in the data packet header may include uplink data (packet) that carries the BAP routing identifier and that is received by the second IAB node and/or uplink data (packet) that carries the BAP routing identifier and that the second IAB node expects to receive.

The BAP routing identifier may include a BAP address (address) and/or a path (path) identifier. For uplink transmission, the BAP address is a BAP address of a target receiving node of the uplink data. For example, the BAP address may be a BAP address of a donor DU. The path identifier indicates an identifier of a routing path that uses the BAP address as a destination address.

For example, it is assumed that two BAP routing identifiers, namely, a BAP routing identifier 1 and a BAP routing identifier 2, are configured for the second IAB node. The second IAB node may collect statistics on buffer statuses of uplink data that respectively corresponds to the BAP routing identifier 1 and the BAP routing identifier 2, that is, collect statistics on buffer statuses of uplink data packets that respectively carry the BAP routing identifier 1 and the BAP routing identifier 2.

In some embodiments, the M RLC CHs may include all or a part of RLC CHs between the second IAB node and the first IAB node. The second IAB node may collect statistics on (summarize) the buffer statuses of the uplink data that respectively corresponds to the M RLC CHs between the second IAB node and the first IAB node. For each of the M RLC CHs, uplink data that corresponds to the RLC CH indicates uplink data (packet) transmitted on the RLC CH. The uplink data (packet) transmitted on the RLC CH may include uplink data (packet) received by the second IAB node from the RLC CH and/or uplink data (packet) that the second IAB node expects to receive from the RLC CH.

For example, it is assumed that there are two RLC CHs between the second IAB node and the first IAB node, namely, an RLC CH 1 and an RLC CH 2. The second IAB node may collect statistics on buffer statuses of uplink data packets transmitted on the RLC CH 1 and the RLC CH 2 respectively.

In some embodiments, the second IAB node may collect statistics on (summarize) the buffer statuses of the uplink data that respectively corresponds to the one or more BAP routing identifiers on each of the M RLC CHs. For each BAP routing identifier on each RLC CH, uplink data that corresponds to the BAP routing identifier on the RLC CH indicates uplink data (packet) that is transmitted on the RLC CH and that carries the BAP routing identifier. The uplink data (packet) that is transmitted on the RLC CH and that carries the BAP routing identifier may include uplink data (packet) that is received by the second IAB node from the RLC CH and that carries the BAP routing identifier and/or uplink data (packet) that the second IAB node expects to receive from the RLC CH and that carries the BAP routing identifier.

For example, it is assumed that an RLC CH 1 is included between the second IAB node and the first IAB node. In addition, the uplink data packets that correspond to the BAP routing identifier 1 and the BAP routing identifier 2 are transmitted on the RLC CH 1, and the second IAB node may collect statistics on buffer statuses of the uplink data packets that are on the RLC CH 1 and that respectively correspond to the BAP routing identifier 1 and the BAP routing identifier 2.

Optionally, that the buffer statuses of the uplink data in the second IAB node may include a congestion state of the uplink data in the second IAB node may be understood as: The uplink data in the second IAB node is congested. The following uses several possible designs for description.

In a possible design, that the first information may indicate the buffer statuses of the uplink data that respectively corresponds to the N BAP routing identifiers, where the buffer statuses may include (be) congestion states of the uplink data that respectively corresponds to the N BAP routing identifiers may be understood as: The uplink data that respectively corresponds to the N BAP routing identifiers is congested, or the uplink data that respectively corresponds to the N BAP routing identifiers may be stacked in the second IAB node and cannot be normally sent.

In another possible design, that the first information may indicate the buffer statuses of the uplink data that respectively corresponds to the M RLC CHs, where the buffer statuses may include (be) congestion states of the uplink data that respectively corresponds to the M RLC CHs may be understood as: The uplink data that respectively corresponds to the M RLC CHs is congested, or the uplink data that respectively corresponds to the M RLC CHs may be stacked in the second IAB node and cannot be normally sent.

In still another possible design, that the first information may indicate the buffer statuses of the uplink data that respectively corresponds to the one or more BAP routing identifiers on each of the M RLC CHs, where the buffer statuses may include (be) congestion states of the uplink data that respectively corresponds to the one or more BAP routing identifiers on each of the M RLC CHs may be understood as: The uplink data that respectively corresponds to the one or more BAP routing identifiers on each of the M RLC CHs is congested, or the uplink data that respectively corresponds to the one or more BAP routing identifiers on each of the M RLC CHs may be stacked in the second IAB node and cannot be normally sent.

The foregoing several possible designs may be combined with each other. The first information may indicate one or more kinds of content in the foregoing several designs. For example, the first information may indicate the buffer statuses of the uplink data that respectively corresponds to the N BAP routing identifiers, where the buffer statuses include a congestion state, and the buffer statuses of the uplink data that respectively corresponds to the M RLC CHs, where the buffer statuses include a congestion state.

Optionally, the buffer statuses of the uplink data that respectively corresponds to the M RLC CHs between the second IAB node and the first IAB node may be determined by the second IAB node based on a buffer status of an RLC CH between the second IAB node and the parent node of the second IAB node.

It may be understood that, for the uplink transmission, the RLC CHs between the second IAB node and the first IAB node may be referred to as ingress RLC CHs of the second IAB node, and RLC CHs between the second IAB node and the parent node of the second IAB node may be referred to as egress RLC CHs of the second IAB node. A mapping relationship between the ingress RLC CHs of the second IAB node and the egress RLC CHs of the second IAB node may be configured by an IAB donor.

For example, the mapping relationship between the ingress RLC CHs of the second IAB node and the egress RLC CHs of the second IAB node may be that shown in Table 1.

**Table 1**

| Ingress RLC CH of a second IAB node | Egress RLC CH of the second IAB node |
|---|---|
| RLC CH 1 | RLC CH 4 |
| RLC CH 2 | RLC CH 5 |
| RLC CH 3 | RLC CH 6 |

It can be learned from Table 1 that there is a mapping relationship between the RLC CH 1 and the RLC CH 4, that is, uplink data received by the second IAB node from the RLC CH 1 may be sent by the RLC CH 4 to a next IAB node. There is a mapping relationship between the RLC CH 2 and the RLC CH 5, that is, uplink data received by the second IAB node from the RLC CH 2 may be sent by the RLC CH 5 to the next IAB node. There is a mapping relationship between the RLC CH 3 and the RLC CH 6, that is, uplink data received by the second IAB node from the RLC CH 3 may be sent by the RLC CH 6 to the next IAB node. Table 1 shows only an example of a one-to-one mapping relationship between the ingress RLC CHs and the egress RLC CHs. In this embodiment of this application, another mapping relationship is not limited. For example, there may be a many-to-one or one-to-many mapping relationship between the ingress RLC CHs and the egress RLC CHs.

In this embodiment of this application, if the second IAB node determines that uplink data that respectively corresponds to one or more egress RLC CHs is in a congestion state, the second IAB node may indicate this case to the child node (namely, the first IAB node) of the second IAB node, so that the first IAB node takes a flow control measure. However, because the first IAB node may not be able to identify egress RLC CHs of the second IAB node, the second IAB node may determine, based on the mapping relationship, an ingress RLC CH to which the one or more congested egress RLC CHs (where the congested egress RLC CHs indicates that uplink data that corresponds to the egress RLC CHs is in a congestion state) are mapped, and indicate an identifier of the ingress RLC CH to the first IAB node (where because the ingress RLC CHs of the second IAB node are the RLC CHs between the second IAB node and the first IAB node, the first IAB node may identify the ingress RLC CHs of the second IAB node). Therefore, the first IAB node takes the flow control measure based on the ingress RLC CH indicated by the second IAB node.

In a possible design, the first information may include (carry) the N BAP routing identifiers and/or identifiers of the M RLC CHs. That is, the BAP routing identifier and/or the identifier of the RLC CH are/is used as a feedback granularity, and signaling overheads are low.

Optionally, in this design, the first IAB node and the second IAB node may be preconfigured. When the first information includes the N BAP routing identifiers, the buffer statuses of the uplink data that corresponds to the N BAP routing identifiers are congestion states (that is, congestion occurs) and/or when the first information includes the identifiers of the M RLC CHs, buffer statuses of uplink data that corresponds to the identifiers of the M RLC CHs are congestion states (that is, congestion occurs). That is, the first information may indicate, only by carrying the N BAP routing identifiers and/or the identifiers of the M RLC CHs, that congestion occurs in uplink data of a granularity that corresponds to the first information. This can reduce the signaling overheads.

Optionally, the first information may indicate the buffer statuses of the uplink data in the second IAB node. The buffer statuses may include a remaining uplink buffer size, an uplink buffer occupancy percentage, indication information about whether the remaining uplink buffer size exceeds a first preset threshold, indication information about whether the uplink buffer occupancy percentage exceeds a second preset threshold, an expected uplink transmission rate, an expected maximum data volume of uplink transmission, or a congestion level.

In a possible design, the first information may further include one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs. That is, the first information may further include the buffer statuses of the BAP routing identifier granularity and/or the buffer statuses of the RLC CH granularity. A feedback granularity is finer, and the buffer statuses can be fed back more accurately, so that the first IAB node can better perform flow control on the uplink data.

The remaining uplink buffer size may be understood as a size of uplink data that can be buffered in the future, that is, a size obtained after a used uplink buffer size is subtracted from a total uplink buffer size (a size of an uplink buffer area) of the second IAB node. A buffer size (buffer size) may be referred to as a size of a buffer. For example, assuming that a size of an uplink buffer that corresponds to the BAP routing identifier 1 in the second IAB node is 10M and uplink data that corresponds to the BAP routing identifier 1 already occupies 7M of the size of the uplink buffer, a remaining uplink buffer size that corresponds to the BAP routing identifier 1 is 3M.

The uplink buffer occupancy percentage may be understood as a percentage of the used buffer size to the total uplink buffer size, or a percentage of an unused buffer size to the total uplink buffer size. For example, assuming that the size of the uplink buffer that corresponds to the BAP routing identifier 1 in the second IAB node is 10M and the uplink data that corresponds to the BAP routing identifier 1 already occupies 7M of the size of the uplink buffer, an uplink buffer occupancy percentage that corresponds to the BAP routing identifier 1 is 7/10.

The indication information about whether the remaining uplink buffer size exceeds the first preset threshold may be understood as: The remaining uplink buffer size exceeds the first preset threshold or does not exceed the first preset threshold. For example, it is assumed that the size of the uplink buffer that corresponds to the BAP routing identifier 1 in the second IAB node is 10M, and the first preset threshold is 5M. If the uplink data that corresponds to the BAP routing identifier 1 occupies 7M of the size of the uplink buffer, indication information may indicate that the remaining uplink buffer size that corresponds to the BAP routing identifier 1 exceeds the first preset threshold. If the uplink data that corresponds to the BAP routing identifier 1 occupies 3M of the size of the uplink buffer, indication information may indicate that the remaining uplink buffer size that corresponds to the BAP routing identifier 1 does not exceed the first preset threshold. The first preset threshold may be configured by the IAB donor.

The indication information about whether the uplink buffer occupancy percentage exceeds the second preset threshold may indicate that the percentage of the used buffer size to the total uplink buffer size exceeds the second preset threshold or does not exceed the second preset threshold. For example, assuming that a percentage of a buffer size used by the BAP routing identifier 1 in the second IAB node in an uplink transmission process to the total uplink buffer size is 70%, and the second preset threshold is 50%, indication information may indicate that the uplink buffer occupancy percentage that corresponds to the BAP routing identifier 1 in the second IAB node exceeds the second preset threshold. Alternatively, the indication information about whether the uplink buffer occupancy percentage exceeds the second preset threshold may indicate whether percentages of unused buffer sizes to the total uplink buffer size that respectively correspond to the N BAP routing identifiers in the second IAB node and/or the M RLC CHs in an uplink transmission process exceed the second preset threshold. The second preset threshold may be configured by the IAB donor.

The expected uplink transmission rate indicates a transmission rate at which the second IAB node expects to receive uplink data from the child node (namely, the first IAB node) of the second IAB node. The expected uplink transmission rate may be a specific expected transmission rate for the uplink data or may be an expected transmission rate range for the uplink data. A unit of the uplink data transmission rate may be bit/s, or may be another unit. This is not limited in this application.

The expected maximum data volume of uplink transmission indicates a maximum data volume of uplink data that the second IAB node expects to receive from the child node (namely, the first IAB node) of the second IAB node. Alternatively, the expected maximum data volume of uplink transmission indicates a maximum data volume of uplink data that can be sent by the first IAB node. The expected maximum data volume of uplink transmission may be a specific data volume of expected uplink data.

The congestion level may indicate a congestion degree of the uplink data. For example, a congestion degree of the uplink data that corresponds to the BAP routing identifier 1 may be non-congestion, congestion, or severe congestion.

In this embodiment of this application, each BAP routing identifier or RLC CH may correspond to a total uplink buffer size, so that a congestion level of uplink data that corresponds to each BAP routing identifier or RLC CH may be determined based on a buffered data volume that corresponds to the BAP routing identifier or RLC CH. For example, when a buffered data volume that corresponds to a BAP routing identifier reaches 20% of a total uplink buffer size that corresponds to the BAP routing identifier, it is determined that a congestion degree is non-congestion; when a buffered data volume that corresponds to a BAP routing identifier reaches 85%, it is determined that a congestion degree is congestion; or when a buffered data volume that corresponds to a BAP routing identifier reaches 90%, it is determined that a congestion degree is severe congestion.

In another possible design, the first information may further include one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the one or more BAP routing identifiers on each of the M RLC CHs. For descriptions of the remaining uplink buffer size, the uplink buffer occupancy percentage, the indication information about whether the remaining uplink buffer size exceeds the first preset threshold, the indication information about whether the uplink buffer occupancy percentage exceeds the second preset threshold, the expected uplink transmission rate, the expected maximum data volume of uplink transmission, or the congestion level, refer to the foregoing part. Details are not described herein again.

For example, in FIG. 6, it is assumed that the first IAB node is a node 5, and the second IAB node is a node 4. If the node 4 detects an uplink or an uplink buffer between the node 4 and a node 3 (a parent node of the node 4) is congested, the node 4 may send the first information to the node 5. An example in which the first information indicates the buffer statuses of the uplink data that respectively corresponds to the N BAP routing identifiers is used. If an uplink between the node 4 and the node 3 is included in a routing path that corresponds to the BAP routing identifier 1, for example, BAP routing identifier 1=donor DU+routing path 1, where the routing path 1 may include: the node 5-the node 4-the node 3-a node 1, the first information may indicate a buffer status of uplink data that corresponds to the BAP routing identifier 1 in the second IAB node. In this case, N=1. The buffer status of the uplink data that corresponds to the BAP routing identifier 1 may include (be) a congestion state. The first information may carry the BAP routing identifier 1.

Optionally, the first information may further carry one or more of the following: a remaining uplink buffer size, an uplink buffer occupancy percentage, indication information about whether the remaining uplink buffer size exceeds a first preset threshold, indication information about whether the uplink buffer occupancy percentage exceeds a second preset threshold, an expected uplink transmission rate, an expected maximum data volume of uplink transmission, or a congestion level that corresponds to the BAP routing identifier 1.

In FIG. 6, an example in which the first information indicates the buffer statuses of the uplink data that respectively corresponds to the M RLC CHs is used. If an RLC CH 1 and an RLC CH 2 between the node 4 and the node 3 are congested and the RLC CH 1 and the RLC CH 2 respectively have a mapping relationship with an RLC CH 3 and an RLC CH 4 between the node 4 and the node 5, the first information may indicate buffer statuses of uplink data that respectively corresponds to the RLC CH 3 and the RLC CH 4. In this case, M=2. The buffer statuses of the uplink data that respectively corresponds to the RLC CH 3 and the RLC CH 4 may include (be) congestion states. The first information may carry identifiers of the RLC CH 3 and the RLC CH 4.

Optionally, the first information may further carry one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that respectively correspond to the RLC CH 3 and the RLC CH 4.

In FIG. 6, an example in which the first information indicates the buffer statuses of the uplink data that respectively corresponds to the N BAP routing identifiers and the buffer statuses of the uplink data that respectively corresponds to the M RLC CHs is used. If the uplink between the node 4 and the node 3 is congested, an RLC CH 5 between the node 4 and a node 2 is congested, the uplink between the node 4 and the node 3 is included in the routing path that corresponds to the BAP routing identifier 1, and there is a mapping relationship between the RLC CH 5 and an RLC CH 6 that is between the node 4 and the node 5, the first information may indicate buffer statuses of uplink data that respectively corresponds to the BAP routing identifier 1 and the RLC CH 6. In this case, N=1, and M=1. The buffer status of the uplink data that corresponds to the BAP routing identifier 1 may include (be) a congestion state, and the buffer status of the uplink data that corresponds to the RLC CH 6 may include (be) a congestion state. The first information may carry the BAP routing identifier 1 and an identifier of the RLC CH 6.

Optionally, the first information may further carry one or more of the following: remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that respectively correspond to the BAP routing identifier 1 and the RLC CH 6.

In FIG. 6, an example in which the first information indicates the buffer statuses of the uplink data that respectively corresponds to the one or more BAP routing identifiers on each of the M RLC CHs is used. If an RLC CH 7 between the node 4 and the node 3 is congested, the RLC CH 7 has a mapping relationship with an RLC CH 8 between the node 4 and the node 5 but the RLC CH 8 further has a mapping relationship with an RLC CH 9 between the node 4 and the node 2, and only the RLC CH 8 is fed back, uplink data transmission of the RLC CH 9 between the node 4 and the node 2 may be affected. Therefore, on this basis, if the uplink between the node 4 and the node 3 is included in the routing path that corresponds to the BAP routing identifier 1, and the BAP routing identifier 1 is further fed back on the basis that the RLC CH 8 is fed back, more accurate feedback can be implemented and the uplink data transmission of the RLC CH 9 between the node 4 and the node 2 are not affected. In this case, the first information may indicate that a buffer status of uplink data of the BAP routing identifier 1 on the RLC CH 8 includes (is) a congestion state.

Optionally, the first information may further carry one or more of the following: a remaining uplink buffer size, an uplink buffer occupancy percentage, indication information about whether the remaining uplink buffer size exceeds a first preset threshold, indication information about whether the uplink buffer occupancy percentage exceeds a second preset threshold, an expected uplink transmission rate, an expected maximum data volume of uplink transmission, or a congestion level that corresponds to the BAP routing identifier 1 on the RLC CH 6.

Optionally, an uplink flow control feedback capability of each IAB node may be configured (or enabled) by the IAB donor (for example, a donor CU or the donor DU). When the IAB node is configured to enable the uplink flow control feedback, the IAB node may send uplink flow control feedback information (namely, the first information) to a child node of the IAB node.

The first information may be carried in a BAP PDU, an RLC message (RLC control PDU), or a MAC CE. This is not limited in this application.

502. The first IAB node receives the first information from the second IAB node.

For related descriptions of the first information, refer to step 501. Details are not described herein again.

In a possible design, a BAP layer of the first IAB node may send the N BAP routing identifiers and/or the identifiers of the M RLC CHs to a MAC layer, so that the MAC layer determines LCHs that respectively correspond to the N BAP routing identifiers and/or the identifiers of the M RLC CHs.

In another possible design, the BAP layer of the first IAB node may determine LCHs that respectively correspond to the N BAP routing identifiers and/or the identifiers of the M RLC CHs, and send identifiers of the determined LCHs to a MAC layer.

A correspondence between the BAP routing identifiers or the identifiers of the RLC CHs and the LCHs may be preconfigured by the IAB donor (for example, the donor CU) or predefined by a protocol. There is a one-to-one correspondence between the RLC CHs and the LCHs, that is, each RLC CH may correspond to one LCH. There is a one-to-one correspondence or a one-to-many correspondence between the BAP routing identifiers and the LCHs, that is, each BAP routing identifier may correspond to one or more LCHs (which may be understood as a group of LCHs). For example, in FIG. 6, it is assumed that the first IAB node is the node 5, and the second IAB node is the node 4. When the uplink between the node 4 and the node 3 is included in the routing path that corresponds to the BAP routing identifier 1, the node 5 (for example, a BAP layer or a MAC layer of the node 5) may determine a group of LCHs that correspond to the BAP routing identifier 1 and that are between the node 5 and the node 4, and uplink data transmitted on the group of LCHs is mapped to that between the node 4 and the node 3 (or uplink data transmitted on the group of LCHs is sent by the node 4 to the node 3).

503. The first IAB node performs uplink flow control based on the first information.

That the first IAB node performs the uplink flow control based on the first information is that the first IAB node controls, based on the first information, traffic of uplink data sent to the second IAB node. The following uses several possible designs for description.

In a possible design, the first IAB node may perform flow control on the uplink data that respectively corresponds to the N BAP routing identifiers.

In this design, optionally, the BAP layer of the first IAB node may decelerate or stop sending (which may be understood as transferring or delivering) of the uplink data that respectively corresponds to the N BAP routing identifiers to a lower-layer protocol layer of the BAP layer, to achieve a traffic limiting effect (that is, achieve an effect of controlling traffic of uplink data sent to the second IAB node). The lower-layer protocol layer of the BAP layer may include at least one of an RLC layer, the MAC layer, and a PHY layer.

In this design, optionally, the MAC layer of the first IAB node may select an LCH that corresponds to a BAP routing identifier other than the N BAP routing identifiers when assembling an uplink data packet in a logical channel prioritization (logical channel prioritization, LCP) process.

In this design, optionally, the MAC layer of the first IAB node may reduce priorities (priorities) of the LCHs that correspond to the N BAP routing identifiers when assembling the uplink data packet in the LCP process. In this embodiment of this application, it may be understood that each LCH may correspond to one priority, and the priority represents a transmission priority of data on the LCH. When it is determined that an LCH is congested, a priority value of the LCH may be set to a predefined value or a maximum value (where the predefined value or the maximum value indicates a low or lowest priority of the LCH), to reduce a transmission priority of data on the LCH and achieve the traffic limiting effect.

In this design, optionally, the MAC layer of the first IAB node may reduce prioritized bit rates (prioritized bit rates, PBRs) of LCHs that correspond to the N BAP routing identifiers when assembling the uplink data packet in the LCP process. In this embodiment of this application, it may be understood that the PBR of the LCH represents a quantity of tokens (tokens) that can be added to the LCH in a unit time. The LCH may be preferentially used for transmission only when the quantity of tokens is greater than 0. A larger quantity of tokens indicates a higher probability that the LCH is preferentially used for transmission. When it is determined that an LCH is congested, a PBR of the LCH may be reduced, to reduce a possibility that the LCH is preferentially used for transmission, and achieve a traffic limiting effect.

In another possible design, the first IAB node may perform flow control on the uplink data that respectively corresponds to the M RLC CHs.

In this design, optionally, the BAP layer of the first IAB node may decelerate or stop sending (which may be understood as transferring or delivering) of the uplink data that respectively corresponds to the M RLC CHs to the lower-layer protocol layer of the BAP layer, to achieve the traffic limiting effect (that is, achieve the effect of controlling the traffic of the uplink data sent to the second IAB node). The lower-layer protocol layer of the BAP layer may include at least one of the RLC layer, the MAC layer, and the PHY layer.

In this design, optionally, the MAC layer of the first IAB node may select an LCH that corresponds to an RLC CH other than the M RLC CHs when assembling the uplink data packet in the LCP process.

In this design, optionally, the MAC layer of the first IAB node may reduce priorities of the LCHs that correspond to the M RLC CHs when assembling the uplink data packet in the LCP process.

In this design, optionally, the MAC layer of the first IAB node may reduce PBRs of the LCHs that correspond to the M RLC CHs when assembling the uplink data packet in the LCP process.

In still another possible design, the first IAB node may perform flow control on uplink data that respectively corresponds to the one or more BAP routing identifiers on the M RLC CHs.

In this design, optionally, the BAP layer of the first IAB node may decelerate or stop sending (transferring or delivering) of the uplink data that respectively corresponds to the one or more BAP routing identifiers on the M RLC CHs to the lower-layer protocol layer of the BAP layer, to achieve the traffic limiting effect.

The foregoing several possible designs may be combined with each other, and the first IAB node uses one or more of the foregoing several possible designs.

Optionally, if the first information further includes the expected maximum data volumes of uplink transmission that correspond to the N BAP routing identifiers in the second IAB node and/or the M RLC CHs, the BAP layer of the first IAB node may control data volumes of the uplink data that respectively corresponds to the N BAP routing identifiers and/or the M RLC CHs to be less than or equal to the expected maximum data volumes of uplink transmission when sending data to the lower-layer protocol layer of the BAP layer. Alternatively, the MAC layer of the first IAB node may control data volumes of the LCHs that correspond to the N BAP routing identifiers and/or the M RLC CHs to be less than or equal to the expected maximum data volumes of uplink transmission when assembling the uplink data packet in the LCP process, to achieve the traffic limiting effect. For example, if the first information includes the BAP routing identifier 1, the first information further includes the expected maximum data volume of uplink transmission that corresponds to the BAP routing identifier 1, for example, 10M, the BAP layer of the first IAB node may control a data volume of the uplink data that corresponds to the BAP routing identifier 1 to be less than or equal to 10M when sending data to the lower-layer protocol layer of the BAP layer.

In some embodiments, the first IAB node may further receive second information from the second IAB node, where the second information indicates to release uplink flow control. The following uses several possible designs for description.

In a possible design, the second indication information indicates to release flow control on uplink data that corresponds to a part or all of the N BAP routing identifiers. In other words, the second information may indicate indication information of the BAP routing identifier granularity to release the flow control at the BAP routing identifier granularity.

In another possible design, the second indication information indicates to release flow control on uplink data that corresponds to a part or all of the M RLC CHs. In other words, the second information may indicate indication information of the RLC CH granularity to release the flow control at the RLC CH granularity.

In still another possible design, the second information may indicate to release flow control on uplink data that corresponds to one or more BAP routing identifiers on each RLC CH of a part or all of the M RLC CHs.

In some other embodiments, after valid time expires, the first IAB node may release the uplink flow control. The valid time is predefined or configured. For example, the valid time may be configured by the parent node (namely, the second IAB node) of the first IAB node or the IAB donor for the first IAB node by using configuration information. Alternatively, the valid time may be written into a storage unit (for example, a memory) of the first IAB node in advance. The valid time may be, for example, 10 ms or 20 ms. This is not limited herein. The following uses several possible designs for description.

In a possible design, after the valid time expires, the first IAB node may release the N BAP routing identifiers.

In another possible design, after the valid time expires, the first IAB node may release the flow control on the uplink data that corresponds to the M RLC CHs.

In still another possible design, after the valid time expires, the first IAB node may release the flow control on the uplink data that corresponds to the one or more BAP routing identifiers on each of the M RLC CHs.

The foregoing several possible designs may be combined with each other, and the first IAB node uses one or more of the foregoing several possible designs.

Based on the method provided in this embodiment of this application, the first IAB node may receive the first information from the second IAB node, where the first information indicates the buffer statuses of the uplink data that respectively corresponds to the N BAP routing identifiers in the second IAB node and/or the buffer statuses of the uplink data that respectively corresponds to the M RLC CHs between the second IAB node and the first IAB node. The first IAB node may perform the uplink flow control based on the first information, so that congestion of the uplink data in the second IAB node can be avoided to avoid a packet loss.

In addition, because the first information indicates the buffer statuses of the BAP routing identifier granularity and/or the buffer statuses of the RLC CH granularity, the first IAB node may perform accurate uplink flow control based on the first information, to avoid affecting a normal transmission link.

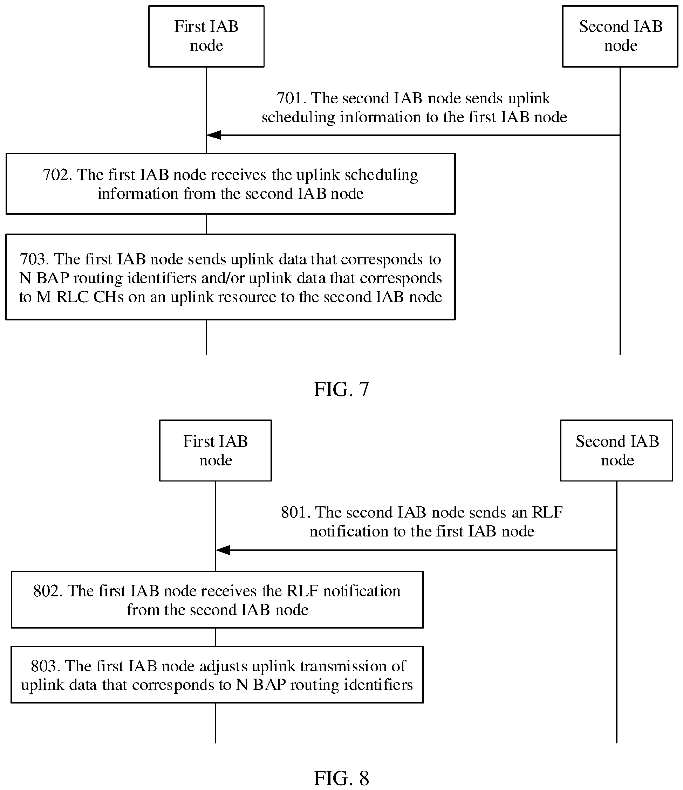

As shown in FIG. 7, an embodiment of this application provides a data transmission method. The following describes a solution 2 in embodiments of this application with reference to FIG. 7. The method in FIG. 7 includes the following steps.

701. A second IAB node sends uplink scheduling information to a first IAB node.

The first IAB node is a child node of the second IAB node, that is, the second IAB node is a parent node of the first IAB node. The second IAB node may be a single-connectivity node, that is, the second IAB node may have one parent node. Alternatively, the second IAB node may be a dual-connectivity or multi-connectivity node, that is, the second IAB node may have a plurality of parent nodes. When detecting that congestion occurs on an uplink or an uplink buffer between the second IAB node and one or more parent nodes of the second IAB node, the second IAB node may send the uplink scheduling information to the child node (namely, the first IAB node) of the second IAB node. Optionally, if a buffer occupancy percentage, a load occupancy percentage, or a buffer size of uplink data sent by an IAB node to a parent node of the IAB node exceeds a specific threshold, it may be considered that an uplink or an uplink buffer between the IAB node and the parent node of the IAB node is congested.

The uplink scheduling information indicates an uplink resource, and the uplink resource is used to transmit specific uplink data.

In a possible design, the uplink resource is used to transmit uplink data that respectively corresponds to N BAP routing identifiers.

In another possible design, the uplink resource is used to transmit uplink data that respectively corresponds to M RLC CHs between the second IAB node and the first IAB node. N and M are integers greater than or equal to 1.

In still another possible design, the uplink resource may be used to transmit uplink data that respectively corresponds to one or more BAP routing identifiers on each of the M RLC CHs.

The foregoing several possible designs may be combined with each other, and the uplink resource may be used to transmit one or more of the uplink data in the foregoing plurality of designs.

Optionally, buffer statuses of the uplink data that respectively corresponds to the N BAP routing identifiers and/or the M RLC CHs may include (be) a non-congestion state. For the uplink data that respectively corresponds to the N BAP routing identifiers and/or the uplink data that respectively corresponds to the M RLC CHs, refer to related descriptions in step 501. Details are not described herein again. Alternatively, buffer statuses of the uplink data that respectively corresponds to the one or more BAP routing identifiers on each of the M RLC CHs may include (be) a non-congestion state. For the uplink data that respectively corresponds to the one or more BAP routing identifiers on each of the M RLC CHs, refer to related descriptions in step 501. Details are not described herein again.

The buffer statuses of the uplink data that respectively corresponds to the M RLC CHs may be determined by the second IAB node based on a buffer status of an RLC CH between the second IAB node and a parent node of the second IAB node. For specific descriptions, refer to related descriptions in step 501.

In this embodiment of this application, if the second IAB node determines that uplink data that respectively corresponds to one or more egress RLC CHs is not congested, the second IAB node may indicate, to the child node (namely, the first IAB node) of the second IAB node, an uplink resource of an ingress RLC CH mapped to the non-congested egress RLC CH. The uplink resource is used to transmit uplink data that corresponds to the ingress RLC CH, so that an uplink data packet that corresponds to a congested RLC CH is indirectly excluded, so that congestion of the uplink data in the second IAB node can be avoided to avoid a packet loss.

In a possible design, the uplink scheduling information may include the N BAP routing identifiers and uplink resource information that corresponds to the N BAP routing identifiers and/or identifiers of the M RLC CHs and uplink resource information that corresponds to the M RLC CHs. Each of the N BAP routing identifiers may correspond to one uplink resource, or the N BAP routing identifiers may correspond to one total uplink resource. Each of the M RLC CHs may correspond to one uplink resource, or the M RLC CHs may correspond to one total uplink resource.

For example, in FIG. 6, an example in which the first IAB node is a node 5 and the second IAB node is a node 4 is used, and during uplink transmission, both the node 4 and the node 5 are configured with a BAP routing identifier 1 (BAP address of a donor node+path identifier 1 (the node 5-the node 4-a node 3-a node 1)) and a BAP routing identifier 2 (BAP address of the donor node+path identifier 2 (the node 5-the node 4-a node 2-the node 1)). An example in which the uplink scheduling information indicates the uplink resource, and the uplink resource is used to transmit the uplink data that respectively corresponds to the N BAP routing identifiers is used. If the node 4 detects that an uplink or an uplink buffer between the node 4 and the node 3 is congested, an uplink or an uplink buffer between the node 4 and the node 2 is not congested, the uplink between the node 4 and the node 3 corresponds to the BAP routing identifier 1, and the uplink between the node 4 and the node 2 corresponds to the BAP routing identifier 2, the node 4 may send the uplink scheduling information to a child node (the node 5). The uplink scheduling information indicates the uplink resource, and the uplink resource is used to transmit uplink data that corresponds to the BAP routing identifier 2. An uplink data packet that corresponds to the BAP routing identifier 1 is excluded, so that congestion of the uplink data in the node 4 can be avoided to avoid a packet loss.

In FIG. 6, an example in which the uplink scheduling information indicates the uplink resource, and the uplink resource is used to transmit the uplink data that respectively corresponds to the M RLC CHs between the second IAB node and the first IAB node is used. If an RLC CH 1 and an RLC CH 2 between the node 4 and the node 3 are not congested and the RLC CH 1 and the RLC CH 2 respectively have a mapping relationship with an RLC CH 3 and an RLC CH 4 between the node 4 and the node 5, the uplink scheduling information may indicate the uplink resource, and the uplink resource is used to transmit uplink data that respectively corresponds to the RLC CH 3 and the RLC CH 4. An uplink data packet that corresponds to a congested RLC CH is indirectly excluded, so that congestion of the uplink data in the node 4 can be avoided to avoid a packet loss.

In FIG. 6, an example in which the uplink scheduling information indicates the uplink resource, and the uplink resource is used to transmit the uplink data that respectively corresponds to the N BAP routing identifiers and the uplink data that respectively corresponds to the M RLC CHs is used. If the uplink between the node 4 and the node 2 is not congested, an RLC CH 5 between the node 4 and the node 3 is not congested, the uplink between the node 4 and the node 2 is included in a routing path that corresponds to the BAP routing identifier 1, and there is a mapping relationship between the RLC CH 5 and an RLC CH 6 that is between the node 4 and the node 5, the uplink resource indicated by the uplink scheduling information may be used to transmit uplink data that corresponds to the BAP routing identifier 1 and uplink data that corresponds to the RLC CH 6. An uplink data packet that corresponds to a congested link of another BAP routing identifier and an uplink data packet that corresponds to a congested RLC CH are indirectly excluded, so that congestion of the uplink data in the node 4 can be avoided to avoid a packet loss.

In FIG. 6, an example in which the uplink scheduling information indicates the uplink resource, and the uplink resource is used to transmit the uplink data that respectively corresponds to the one or more BAP routing identifiers on each of the M RLC CHs is used. If an RLC CH 7 between the node 4 and the node 3 is not congested, the RLC CH 7 has a mapping relationship with an RLC CH 8 between the node 4 and the node 5, but the RLC CH 8 further has a mapping relationship with an RLC CH 9 between the node 4 and the node 2, the RLC CH 9 is congested, and only the RLC CH 8 is fed back, uplink data may continue to be congested on the RLC CH 9. Therefore, on this basis, if the uplink between the node 4 and the node 3 is included in the routing path that corresponds to the BAP routing identifier 1, the BAP routing identifier 1 is further indicated on the basis that the RLC CH 8 is indicated, that is, the uplink resource is used to transmit the uplink data that corresponds to the BAP routing identifier 1 on the RLC CH 8. Only the uplink data that corresponds to the BAP routing identifier 1 on the RLC CH 8 is scheduled, and uplink data that corresponds to the RLC CH 9 is not scheduled, so that the uplink data may not continue to be congested on the RLC CH 9 to avoid a packet loss.

Optionally, the uplink scheduling information may be carried in DCI.

702. The first IAB node receives the uplink scheduling information from the second IAB node.

For related descriptions of the uplink scheduling information, refer to step 701. Details are not described herein again.

703. The first IAB node sends the uplink data that corresponds to the N BAP routing identifiers and/or the uplink data that corresponds to the M RLC CHs on the uplink resource to the second IAB node.

After receiving the uplink scheduling information, the first IAB node may adjust an LCP rule. For example, when assembling an uplink data packet in an LCP process, the first IAB node may select LCHs that correspond to the N BAP routing identifiers and/or the M RLC CHs. This equals to excluding an uplink data packet that corresponds to another BAP routing identifier and/or RLC CH. Therefore, congestion of the uplink data in the second IAB node can be avoided to avoid a packet loss. Alternatively, when assembling an uplink data packet, the first IAB node may transmit only the uplink data that respectively corresponds to the one or more BAP routing identifiers on each of the M RLC CHs. Therefore, congestion of the uplink data in the second IAB node can be avoided to avoid a packet loss.

Based on the method provided in this embodiment of this application, the first IAB node may receive the uplink scheduling information from the second IAB node, where the uplink scheduling information indicates the uplink resource, and the uplink resource is used to transmit the uplink data that corresponds to the N BAP routing identifiers and/or the uplink data that corresponds to the M RLC CHs between the second IAB node and the first IAB node. The first IAB node sends the uplink data that corresponds to the N BAP routing identifiers and/or the uplink data that corresponds to the M RLC CHs on the uplink resource to the second IAB node. Therefore, congestion of the uplink data in the second IAB node can be avoided to avoid a packet loss.

In addition, because the uplink scheduling information may be used to schedule uplink data at a BAP routing identifier granularity and/or uplink data at an RLC CH granularity, the first IAB node may perform accurate uplink data transmission based on the uplink scheduling information, to avoid affecting a normal transmission link.

As shown in FIG. 8, an embodiment of this application provides an uplink transmission method. The following describes a solution 3 in embodiments of this application with reference to FIG. 8. The method in FIG. 8 includes the following steps.

801. A second IAB node sends an RLF notification to a first IAB node.

The first IAB node is a child node of the second IAB node, that is, the second IAB node is a parent node of the first IAB node. The second IAB node may be a single-connectivity node, that is, the second IAB node may have one parent node. Alternatively, the second IAB node may be a dual-connectivity or multi-connectivity node, that is, the second IAB node may have a plurality of parent nodes. Optionally, when detecting that an RLF (namely, link unavailability or a link failure) occurs on an uplink between the second IAB node and one or more parent nodes of the second IAB node, the second IAB node may send the RLF notification to the child node (namely, the first IAB node) of the second IAB node.

In a possible design, the RLF notification indicates that the RLF occurs on wireless backhaul links that correspond to N BAP routing identifiers, where N is an integer greater than or equal to 1. For example, the RLF notification may include the N BAP routing identifiers. A routing path that corresponds to each of the N BAP routing identifiers includes the wireless backhaul link on which the RLF occurs.

In another possible design, the RLF notification may indicate that the RLF occurs on wireless backhaul links that correspond to N BAP addresses and/or path identifiers (identities, IDs). For example, the RLF notification may include the BAP addresses and/or the path IDs that correspond to the wireless backhaul links on which the RLF occurs. The BAP address may be a BAP address of a target receiving node that corresponds to uplink data that needs to pass through the wireless backhaul link on which the RLF occurs. The target receiving node may be, for example, a donor DU. The path ID may be an identifier of a routing path including the wireless backhaul link on which the RLF occurs.

For example, in FIG. 6, an example in which the first IAB node is a node 5 and the second IAB node is a node 4 is used. If an RLF occurs on a wireless backhaul link between the node 4 and a node 3, and the wireless backhaul link between the node 4 and the node 3 corresponds to a BAP routing identifier 1, for example, BAP routing identifier 1=BAP address of the donor DU+path identifier 1 (the node 5-the node 4-the node 3-a node 1), that is, a routing path that corresponds to the BAP routing identifier 1 includes the wireless backhaul link between the node 4 and the node 3, the node 5 may send the RLF notification to the node 4, where the RLF notification may include the BAP routing identifier 1 to indicate that the RLF occurs on the wireless backhaul link that corresponds to the BAP routing identifier 1.

802. The first IAB node receives the RLF notification from the second IAB node.

For related descriptions of the RLF notification, refer to step 801. Details are not described herein again.

803. The first IAB node adjusts uplink transmission of uplink data that corresponds to the N BAP routing identifiers.

The first IAB node may reroute, based on the RLF notification, the uplink data that corresponds to the N BAP routing identifiers.

In a possible design, if the RLF notification includes the N BAP routing identifiers, the first IAB node may select, for the uplink data that corresponds to the N BAP routing identifiers, a BAP routing identifier other than the N BAP routing identifiers to perform the uplink transmission. The BAP routing identifier and the N BAP routing identifiers have a same target IAB donor node.

In another possible design, if the RLF notification includes the BAP addresses and/or the path IDs that correspond to the wireless backhaul links on which the RLF occurs, the first IAB node may select another BAP address or another path ID in a routing table to perform routing. The another BAP address (for example, a BAP address of a first donor DU) and the BAP addresses (for example, a BAP address of a second donor DU) in the RLF notification belong to a same donor CU.

Optionally, the first IAB node may further modify routing information (namely, a BAP routing identifier) in a BAP header of the uplink data that corresponds to the N BAP routing identifiers. For example, the first IAB node may replace the BAP routing identifier in the BAP header of the uplink data that corresponds to the N BAP routing identifiers with another BAP routing identifier.

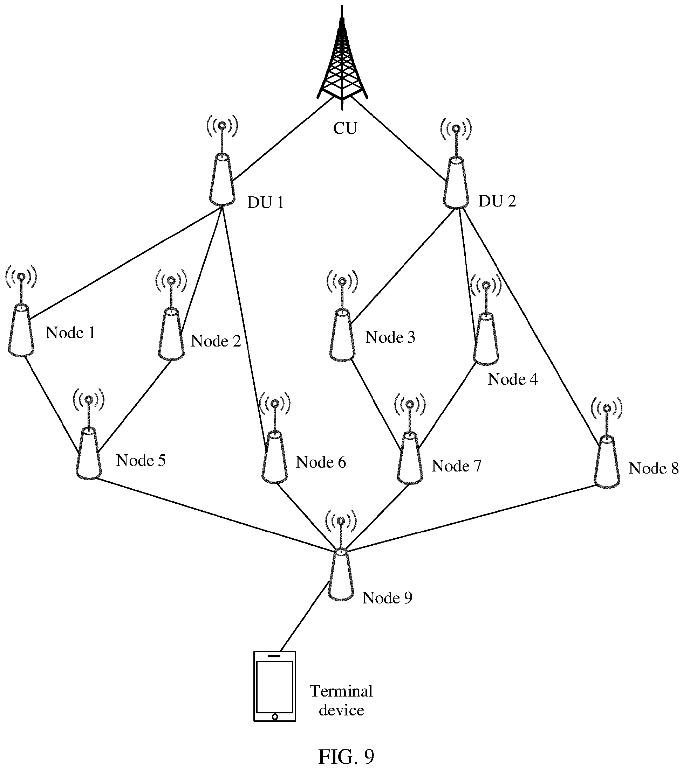

For example, in FIG. 9, an example in which the first IAB node is a node 9 and the second IAB node is a node 5 is used. The node 9 may store a routing table shown in Table 2.

**Table 2**

| BAP routing identifier | Target IAB donor node | Path identifier in the BAP routing identifier | Next-Hop node identifier |
|---|---|---|---|
| BAP routing identifier 1 | Donor DU 1 | Path 1 (node 5-node 1) | Node 5 |
| BAP routing identifier 2 | Donor DU 1 | Path 2 (node 5-node 2) | Node 5 |
| BAP routing identifier 3 | Donor DU 1 | Path 3 (node 6) | Node 6 |
| BAP routing identifier 4 | Donor DU 2 | Path 4 (node 7-node 3) | Node 7 |
| BAP routing identifier 5 | Donor DU 2 | Path 5 (node 7-node 4) | Node 7 |
| BAP routing identifier 6 | Donor DU 2 | Path 6 (node 8) | Node 8 |

It can be learned from Table 2 that the node 9 is configured with six BAP routing identifiers that are respectively a BAP routing identifier 1 to a BAP routing identifier 6. There are six paths between the node 9 and a CU: a path 1 to a path 6 respectively. For example, for the BAP routing identifier 1, a target IAB donor node of the BAP routing identifier 1 is a donor DU 1, a path identifier of the BAP routing identifier 1 is a path 1 (node 5-node 1), and a next-hop node identifier of the BAP routing identifier 1 is the node 5.

For example, if the RLF notification includes one BAP routing identifier, for example, the BAP routing identifier 1, the node 9 may select a BAP routing identifier 2 or a BAP routing identifier 3 for uplink data that corresponds to the BAP routing identifier 1 to perform uplink transmission. The BAP routing identifier 2 and the BAP routing identifier 3 have a same target IAB donor node (the donor DU 1) as the BAP routing identifier 1.

Optionally, the first IAB node may further replace routing information (namely, the BAP routing identifier 1) in a BAP header of the uplink data that corresponds to the BAP routing identifier 1 with the BAP routing identifier 2 or the BAP routing identifier 3.

In some embodiments, a BAP layer of the first IAB node may stop sending of the uplink data that corresponds to the N BAP routing identifiers to a lower-layer protocol layer of the BAP layer. Alternatively, when assembling an uplink data packet in an LCP process, a MAC layer of the first IAB node selects an LCH that corresponds to a BAP routing identifier other than the N BAP routing identifiers, to control traffic of uplink data sent to the second IAB node, so that congestion of the uplink data in the second IAB node can be avoided to avoid a packet loss.

In addition, if in a subsequent technical standard, the first IAB node may learn of related information (for example, an identifier of a parent node) of the parent node of the second IAB node or related information about a link between the second IAB node and the parent node of the second IAB node, the RLF notification carries related information of the parent node of the second IAB node on which the RLF occurs or the related information about the link between the second IAB node and the parent node of the second IAB node, to achieve a rerouting effect.

In a related technology, if the second IAB node detects that a wireless backhaul link between the second IAB node and the parent node of the second IAB node fails, the second IAB node may recover the wireless backhaul link. In a recovery process, uplink data transmission is interrupted, resulting in a packet loss. Based on the method provided in this embodiment of this application, the second IAB node may send the RLF notification to the first IAB node, where the RLF notification indicates that the RLF occurs on the wireless backhaul links that correspond to the N BAP routing identifiers. The first IAB node may adjust (reroute) the uplink transmission of the uplink data that corresponds to the N BAP routing identifiers, so that congestion of the uplink data in the second IAB node can be avoided to avoid a packet loss.

In addition, because the RLF notification may indicate the BAP routing identifier, the first IAB node may perform accurate route adjustment based on the BAP routing identifier, to avoid affecting a normal transmission link.

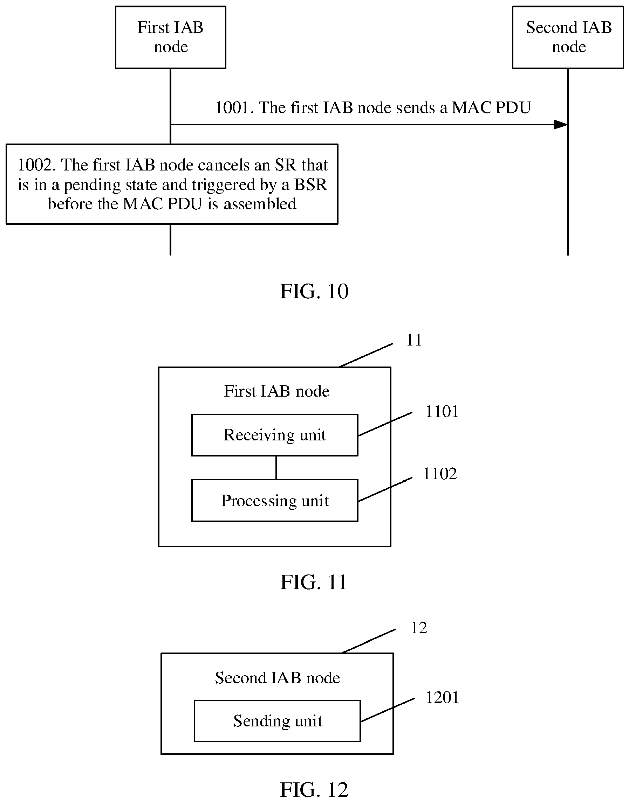

As shown in FIG. 10, an embodiment of this application provides an SR cancellation method. The following describes a solution 3 in embodiments of this application with reference to FIG. 10. The method in FIG. 10 includes the following steps.

1001. A first IAB node sends a media access control protocol data unit (media access control protocol data unit, MAC PDU), where the MAC PDU includes a buffer status of a buffer status report (buffer status reporting, BSR) triggered by a last trigger event before the MAC PDU is assembled.

When the first IAB node has data to be sent but has no corresponding uplink resource (uplink transmission resource), the BSR may be triggered. The BSR may be carried in the MAC PDU for sending. The BSR may include a first BSR (which may also be referred to as a regular BSR) and a second BSR (which may also be referred to as a periodic BSR). The first BSR is used to request an uplink resource from a parent node (namely, a second IAB node) of the first IAB node for uplink data that has arrived at the first IAB node. The second BSR is used to request an uplink resource from the parent node of the first IAB node for uplink data that has not arrived at or is to arrive at the first IAB node.

Optionally, the first BSR or the second BSR may be carried in a long (format of) BSR media access control control element (media access control control element, MAC CE) or a short (format of) BSR MAC CE in the MAC PDU.

After the first BSR or the second BSR is triggered, if there is no available (satisfied) uplink resource for sending the BSR, a MAC layer may trigger an SR, where the SR is used to request an uplink resource. It should be understood that the SR is considered to be in a pending (pending) state from being triggered to being canceled.

The BSR triggered by the last trigger event before the MAC PDU is assembled is a last BSR triggered by the first IAB node before the MAC PDU is assembled.

For example, it is assumed that at a first moment, the first IAB node has 10M data to be sent, and therefore a BSR 1 is triggered. At a second moment later than the first moment, the first IAB node has 20M data (including the 10M data to be sent at the first moment) to be sent, and therefore a BSR 2 is triggered. After the second moment, the first IAB node sends a MAC PDU, where the MAC PDU may include a buffer status of the BSR 2.

1002. The first IAB node cancels the SR that is in the pending status and triggered by the BSR before the MAC PDU is assembled.

That is, the SR triggered by the first BSR or triggered by the second BSR before the MAC PDU is assembled is canceled, and a corresponding SR-prohibit timer is stopped.

In a possible design, if the MAC PDU includes a buffer status of the first BSR triggered by the last trigger event before the MAC PDU is assembled, the SR triggered by the first BSR before the MAC PDU is assembled is canceled, and a corresponding SR-prohibit timer is stopped. If the MAC PDU includes a buffer status of the second BSR triggered by the last trigger event before the MAC PDU is assembled, the SR triggered by the second BSR before the MAC PDU is assembled is canceled, and a corresponding SR-prohibit timer is stopped.

In addition, if an uplink resource in uplink scheduling or an uplink grant delivered by the parent node of the first IAB node can accommodate all transmission data in the pending state (namely, all uplink data to be transmitted by the first IAB node which may include the data that has arrived at the first IAB node and/or the uplink data that has not arrived at/is to arrive at the first IAB node), each SR that is triggered by the first BSR or triggered by the second BSR and that is in the pending state is canceled, and the corresponding SR prohibit-timer is stopped.

Based on the SR cancellation method provided in this application, the SR triggered by the MAC layer of the first IAB node can be accurately canceled, so that a problem of an increase in an uplink transmission delay caused by incorrect cancellation of an SR can be avoided, and in addition, a problem of resource waste caused by repeated resource applications due to untimely cancellation of an SR may also be avoided.

In the foregoing embodiments provided in this application, the methods provided in embodiments of this application are separately described from perspectives of the first IAB node, the second IAB node and interaction between the first IAB node and the second IAB node. To implement functions in the methods provided in embodiments of this application, the first IAB node or the second IAB node may include a hardware structure and/or a software module, and implement the functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

When each functional module is obtained through division based on each corresponding function, FIG. 11 is a schematic diagram of a possible structure of an apparatus 11 in the foregoing embodiments. The apparatus may be a first IAB node, and includes a receiving unit 1101 and a processing unit 1102.

The receiving unit 1101 may be the communication interface 404 in FIG. 4. The processing unit 1102 may be the processor 401 and/or the processor 405 in FIG. 4.

In the method embodiments shown in FIG. 5, FIG. 7, FIG. 8, and FIG. 10, the receiving unit 1101 is configured to support the first IAB node in performing, for example, the process 502 in FIG. 5, the process 702 in FIG. 7, and the process 802 in FIG. 8. The processing unit 1102 is configured to support the first IAB node in performing, for example, the process 503 in FIG. 5 and the process 803 in FIG. 8.

Optionally, the first IAB node may further include a sending unit 1103 (which is not shown in FIG. 11), configured to support the first IAB node in performing, for example, the process 1001 in FIG. 10.

All related content of the steps in the foregoing method embodiments may be cited in function descriptions of the corresponding functional modules. Details are not described herein again.

When each functional module is obtained through division based on each corresponding function, FIG. 12 is a schematic diagram of a possible structure of an apparatus 12 in the foregoing embodiments. The apparatus may be a second IAB node, and includes a sending unit 1201.

The sending unit 1201 may be the communication interface 404 in FIG. 4.

In the method embodiments shown in FIG. 5, FIG. 7, and FIG. 8, the sending unit 1201 is configured to support the second IAB node in performing, for example, the process 501 in FIG. 5, the process 701 in FIG. 7, and the process 801 in FIG. 8.

All related content of the steps in the foregoing method embodiments may be cited in function descriptions of the corresponding functional modules. Details are not described herein again.

Division into the modules in embodiments of this application is an example, is merely division into logical functions, and may be other division during actual implementation. In addition, functional modules in embodiments of this application may be integrated into one processor, or each of the functional modules may exist alone physically, or two or more modules may be integrated into one module. The integrated module may be implemented in a form of hardware, or may be implemented in a form of a software functional module. For example, in embodiments of this application, the receiving unit and the sending unit may be integrated into the transceiver unit.

The methods provided in embodiments of this application may be all or partially implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

It is clear that a person skilled in the art can make various modifications and variations to embodiments of this application without departing from the scope of this application. In this case, this application is intended to cover these modifications and variations of embodiments of this application provided that they fall within the scope of protection defined by the following claims and their equivalent technologies.

## Claims

1. A flow control method, comprising:
receiving, by a first integrated access and backhaul IAB node, first information from a second IAB node, wherein the first information indicates buffer statuses of uplink data that respectively corresponds to N backhaul adaptation protocol BAP routing identifiers in the second IAB node and/or buffer statuses of uplink data that respectively corresponds to M radio link control channels RLC CHs between the second IAB node and the first IAB node, wherein the first IAB node is a child node of the second IAB node, and N and M are integers greater than or equal to 1; and
performing, by the first IAB node, uplink flow control based on the first information.

2. The flow control method according to claim 1, wherein the performing, by the first IAB node, uplink flow control based on the first information comprises:
performing, by the first IAB node, flow control on the uplink data that respectively corresponds to the N BAP routing identifiers; and/or
performing, by the first IAB node, flow control on the uplink data that respectively corresponds to the M RLC CHs.

3. The flow control method according to claim 1 or 2, wherein
the buffer statuses of the uplink data that respectively corresponds to the N BAP routing identifiers comprise a congestion state and/or the buffer statuses of the uplink data that respectively corresponds to the M RLC CHs comprise a congestion state.

4. The flow control method according to any one of claims 1 to 3, wherein
the first information comprises the N BAP routing identifiers and/or identifiers of the M RLC CHs.

5. The flow control method according to claim 4, wherein the first information further comprises one or more of the following:
remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

6. The flow control method according to claims 2 to 5, wherein the performing, by the first IAB node, uplink flow control based on the first information comprises:
decelerating or stopping, by a BAP layer of the first IAB node, sending of the uplink data that respectively corresponds to the N BAP routing identifiers and/or the uplink data that respectively corresponds to the M RLC CHs to a lower-layer protocol layer of the BAP layer;
selecting, by a MAC layer of the first IAB node, a logical channel LCH that corresponds to a BAP routing identifier other than the N BAP routing identifiers and/or an LCH that corresponds to an RLC CH other than the M RLC CHs when assembling an uplink data packet;
reducing, by a MAC layer of the first IAB node, priorities of LCHs that correspond to the N BAP routing identifiers and/or priorities of LCHs that correspond to the M RLC CHs when assembling an uplink data packet; or
reducing, by a MAC layer of the first IAB node, prioritized bit rates PBRs of LCHs that correspond to the N BAP routing identifiers and/or PBRs of LCHs that correspond to the M RLC CHs when assembling an uplink data packet.

7. The flow control method according to claim 5, wherein the performing, by the first IAB node, uplink flow control based on the first information comprises:
controlling, by a BAP layer of the first IAB node, data volumes of the uplink data that respectively corresponds to the N BAP routing identifiers and/or the M RLC CHs to be less than or equal to the expected maximum data volumes of uplink transmission when sending data to a lower-layer protocol layer of the BAP layer; or
controlling, by a MAC layer of the first IAB node, data volumes of LCHs that correspond to the N BAP routing identifiers and/or the M RLC CHs to be less than or equal to the expected maximum data volumes of uplink transmission when assembling an uplink data packet.

8. The flow control method according to any one of claims 2 to 7, further comprising:
receiving, by the first IAB node, second information from the second IAB node, wherein the second information indicates to release flow control on uplink data that corresponds to a part or all of the N BAP routing identifiers and/or flow control on uplink data that corresponds to a part or all of the M RLC CHs; or
releasing flow control on the uplink data that corresponds to the N BAP routing identifiers and/or the M RLC CHs after valid time expires, wherein the valid time is predefined or configured.

9. The flow control method according to any one of claims 1 to 8, wherein
the first information is carried in a BAP control protocol data unit PDU, a radio link control RLC message, or a media access control control element MAC CE.

10. A flow control method, comprising:
sending, by a second integrated access and backhaul IAB node, first information to a first IAB node, wherein the first information indicates buffer statuses of uplink data that respectively corresponds to N backhaul adaptation protocol BAP routing identifiers in the second IAB node and/or buffer statuses of uplink data that respectively corresponds to M radio link control channels RLC CHs between the second IAB node and the first IAB node, wherein the first IAB node is a child node of the second IAB node, and N and M are integers greater than or equal to 1.

11. The flow control method according to claim 10, wherein
the buffer statuses of the uplink data that respectively corresponds to the N BAP routing identifiers comprise a congestion state and/or the buffer statuses of the uplink data that respectively corresponds to the M RLC CHs comprise a congestion state.

12. The flow control method according to claim 10 or 11, wherein
the first information comprises the N BAP routing identifiers and/or identifiers of the M RLC CHs.

13. The flow control method according to claim 12, wherein the first information further comprises one or more of the following:
remaining uplink buffer sizes, uplink buffer occupancy percentages, indication information about whether the remaining uplink buffer sizes exceed a first preset threshold, indication information about whether the uplink buffer occupancy percentages exceed a second preset threshold, expected uplink transmission rates, expected maximum data volumes of uplink transmission, or congestion levels that correspond to the N BAP routing identifiers in the second IAB node and/or the M RLC CHs.

14. The flow control method according to any one of claims 10 to 13, further comprising:
sending, by the second IAB node, second information to the first IAB node, wherein the second information indicates to release flow control on uplink data that corresponds to a part or all of the N BAP routing identifiers and/or flow control on uplink data that corresponds to a part or all of the M RLC CHs.

15. A communication apparatus, wherein the communication apparatus comprises a memory and a processor, and the processor is coupled to the memory, wherein
the memory is configured to store computer-executable instructions; and when the communication apparatus runs, the processor executes the computer-executable instructions, to enable the communication apparatus to perform the flow control method according to any one of claims 1 to 9.

16. A communication apparatus, wherein the communication apparatus comprises a memory and a processor, and the processor is coupled to the memory, wherein
the memory is configured to store computer-executable instructions; and when the communication apparatus runs, the processor executes the computer-executable instructions, to enable the communication apparatus to perform the flow control method according to any one of claims 10 to 14.

17. A computer-readable storage medium, comprising instructions, wherein when the instructions are run on a computer, the computer is enabled to perform the flow control method according to any one of claims 1 to 14.
